# EUROPEAN PATENT APPLICATION

(11) **EP 4 600 227 A1**
(43) Date of publication of application: **13.08.2025**
(21) Application number: 23896120.5
(22) Date of filing: 15.08.2023
(51) Int. Cl.: C03C 10/12

(54) **GLASS AND PREPARATION METHOD THEREFOR AND USE THEREOF, COVER PLATE STRUCTURE, AND ELECTRONIC DEVICE**

(30) Priority: 30.11.2022 CN 202211517462
(71) Applicant: Honor Device Co., Ltd., Shenzhen, Guangdong 518040 (CN)
(72) Inventor: HAN, Shuai, Shenzhen, Guangdong 518040 (CN); XU, Wenbin, Shenzhen, Guangdong 518040 (CN); LIU, Fangcheng, Shenzhen, Guangdong 518040 (CN); HUANG, Di, Shenzhen, Guangdong 518040 (CN)
(74) Representative: Gill Jennings & Every LLP
(86) International application number: PCT/CN2023/113057
(87) International publication number: WO 2024/113959

(57) **Abstract**

This application discloses glass, a preparation method therefor, and an application thereof, a cover structure, and an electronic device, and relates to the field of display technologies, to reduce a crease in a bendable region of a screen. The glass includes a first surface and a second surface disposed opposite to each other in a thickness direction of the glass, where surface roughness of at least one of the first surface and the second surface is greater than or equal to 3 nm and less than or equal to 100 nm, and a Young's modulus of the glass is greater than or equal to 90 GPa.

## Description

This application claims priority to Chinese Patent Application No. 202211517462.1, filed with the China National Intellectual Property Administration on November 30, 2022 and entitled "GLASS, PREPARATION METHOD THEREFOR, AND APPLICATION THEREOF, COVER STRUCTURE, AND ELECTRONIC DEVICE", which is incorporated herein by reference in its entirety.

### TECHNICAL FIELD

This application relates to the field of electronic device technologies, and in particular, to glass, a preparation method therefor, and an application thereof, a cover structure, and an electronic device.

### BACKGROUND

With development of electronic products, as a new form of electronic terminal product, a foldable electronic device is favored by increasingly more consumers due to advantages such as bendability and portability of the foldable electronic device.

A screen serves as an important part of the foldable electronic device, and display aesthetics of the screen greatly affects a consumer's selection of the foldable electronic device. Currently, a crease in a bendable region of the screen is a major pain point affecting the display aesthetics of the screen. Therefore, how to reduce the crease in the bendable region of the screen becomes a technical problem that needs to be urgently resolved at present.

### SUMMARY

Embodiments of this application provide glass, a preparation method therefor, and an application thereof, a cover structure, and an electronic device, to reduce a crease in a bendable region of a screen.

To achieve the foregoing objective, the following technical solutions are used in the embodiments of this application.

According to a first aspect, this application provides glass. The glass includes a first surface and a second surface disposed opposite to each other in a thickness direction of the glass, where surface roughness of at least one of the first surface and the second surface is greater than or equal to 3 nm and less than or equal to 100 nm, and a Young's modulus of the glass is greater than or equal to 90 GPa.

For the glass in an embodiment of this application, the surface roughness Ra of the first surface and/or the second surface is set to 3 nm~100 nm, so that adhesion between an organic material and each of the first surface and/or the second surface can be increased, and a risk that the organic material attached to the first surface and/or the second surface is peeled off from the first surface and/or the second surface can be reduced or even avoided. Therefore, deformation of the organic material in a folding process can be reduced, to reduce creases of the cover structure and the screen. In addition, the surface roughness Ra of the first surface and/or the second surface is set to 3 nm~100 nm, so that haze of the glass can be reduced, transmittance of the glass can be increased, and optical performance of the glass can be ensured. Therefore, optical performance of the cover junction can be further ensured. In addition, for the glass in this embodiment of this application, the Young's modulus of the glass is set to be greater than or equal to 90 GPa, so that rigidity and impact resistance performance of the glass can be improved, helping reduce deformation of the glass, and improve a deformation resistance capability of the cover structure and a capability of the cover structure to recover to an original shape after deformation. Therefore, a crease in the bendable region of the screen can be reduced to better protect the screen.

In a possible implementation of the first aspect, the surface roughness of the at least one of the first surface and the second surface is greater than or equal to 15 nm and less than or equal to 80 nm. In this way, while ensuring optical performance of the glass, adhesion between the organic material and each of the first surface and/or the second surface can be further increased, so that deformation of the organic material in a folding process can be further reduced, to further reduce creases of the cover structure and the screen.

In a possible implementation of the first aspect, the glass is nanocrystal glass. In this way, it can be ensured that the glass has a relatively high Young's modulus, helping further improve rigidity of the glass. Therefore, deformation resistance capabilities of the glass and the cover structure, and capabilities of the glass and the cover structure to recover to original shapes after deformation can be further improved, to reduce a crease in the bendable region of the screen.

In a possible implementation of the first aspect, the nanocrystal glass includes a primary crystalline phase, and the primary crystalline phase is one or more of spodumene, petalite, lithium silicate, lithium disilicate, β-quartz, zirconium oxide, spinel, and zinc spinel. In this way, optical performance of the nanocrystal glass can be ensured on a basis of ensuring mechanical performance of the nanocrystal glass, and processing difficulty of the nanocrystal glass can be reduced.

In a possible implementation of the first aspect, the nanocrystal glass includes the primary crystalline phase, a mass fraction of the primary crystalline phase is greater than or equal to 50%, and the primary crystalline phase is a crystalline phase with a relatively obvious peak profile in an X-ray diffraction (XRD) pattern of the glass. The mass fraction of the primary crystalline phase is equal to a mass of the primary crystalline phase divided by a sum of masses of all crystalline phases in the nanocrystal glass (also referred to as a mass of the total crystalline phase). For example, the mass fraction of the primary crystalline phase may be 50%, 55%, 60%, 65%, 70%, 75%, 78%, 80%, 82%, 83%, 85%, or the like. In this way, the mass fraction of the primary crystalline phase is controlled to be not less than 50%, so that purity of the primary crystalline phase can be increased, and a quantity of times of scattering between different crystalline phases can be reduced. Therefore, transmittance of the nanocrystal glass can be increased, haze of the nanocrystal glass can be reduced, and optical performance of the nanocrystal glass can be improved, to help improve optical performance of the glass, the cover structure, and the screen.

In a possible implementation of the first aspect, an average crystalline phase particle size of the nanocrystal glass is greater than or equal to 5 nm and less than or equal to 80 nm. Therefore, the average crystalline phase particle size of the nanocrystal glass is controlled to be greater than or equal to 5 nm and less than or equal to 80 nm, so that both optical performance and drop resistance performance of the nanocrystal glass can be considered, to ensure optical performance and drop resistance performance of the glass.

In a possible implementation of the first aspect, the average crystalline phase particle size of the nanocrystal glass is greater than or equal to 5 nm and less than or equal to 60 nm.

In a possible implementation of the first aspect, the average crystalline phase particle size of the nanocrystal glass is greater than or equal to 5 nm and less than or equal to 40 nm.

In a possible implementation of the first aspect, the average crystalline phase particle size of the nanocrystal glass is greater than or equal to 5 nm and less than or equal to 30 nm.

In a possible implementation of the first aspect, a thickness of the glass is greater than or equal to 0.02 mm and less than or equal to 0.1 mm. For example, the thickness of the glass may be 0.02 mm, 0.03 mm, 0.04 mm, 0.05 mm, 0.06 mm, 0.07 mm, 0.08 mm, 0.09 mm, 0.1 mm, or the like. In this way, both bending performance and mechanical strength of the glass can be considered.

In a possible implementation of the first aspect, transmittance of the glass at a wavelength of 550 nm is greater than or equal to 89%. For example, the transmittance of the glass at the wavelength of 550 nm is 89%, 90%, 91%, 92%, or the like. In this way, it can be ensured that the glass and the cover structure have excellent optical performance.

In a possible implementation of the first aspect, a pen drop height of the glass is greater than or equal to 20 mm. For example, the pen drop height of the glass is 20 mm, 21 mm, 22 mm, 23 mm, 24 mm, 25 mm, 26 mm, 27 mm, 28 mm, 29 mm, 30 mm, 31 mm, 32 mm, 35 mm, or the like. In this way, mechanical strength of the glass and the cover structure can be increased and impact resistance performance thereof can be improved.

In a possible implementation of the first aspect, a minimum static bending diameter of the glass is less than or equal to (0.8Et+t) mm; and E is the Young's modulus of the glass, in a unit of GPa, and t is the thickness of the glass, in a unit of mm, E and t in the calculation formula are only numeric values, and the units are not taken into account. In this way, static bending performance of the glass can be ensured, and bending strength of the glass can be ensured, helping reduce creases of the cover structure and in the bendable region of the screen.

In a possible implementation of the first aspect, a quantity of times that the glass is dynamically bent at a bending diameter of (Et+t) mm is greater than or equal to 200,000 times, where E is the Young's modulus of the glass, in a unit of GPa, and t is the thickness of the glass, in a unit of mm, E and t in the calculation formula are only numeric values, and the units are not taken into account. In this way, dynamic bending performance of the glass can be ensured.

In a possible implementation of the first aspect, the quantity of times that the glass is dynamically bent at the bending diameter of (Et+t) mm is greater than or equal to 300,000 times. In this way, dynamic bending performance of the glass can be further ensured.

In a possible implementation of the first aspect, an ion exchange layer is formed on a surface of the glass. In this way, mechanical performance of the glass can be further improved, hardness of the glass can be increased, and a deformation resistance capability thereof can be improved.

In a possible implementation of the first aspect, the ion exchange layer includes a K ion exchange layer, and a depth of the K ion exchange layer is greater than or equal to 0.06 t and less than or equal to 0.2 t, where t is the thickness of the glass, in a unit of mm.

In a possible implementation of the first aspect, the ion exchange layer includes a Na ion exchange layer, and a depth of the Na ion exchange layer is greater than or equal to 0.15 t and less than or equal to 0.25 t, where t is the thickness of the glass, in a unit of mm.

In a possible implementation of the first aspect, the ultra-thin includes a side surface, the side surface is connected between the first surface and the second surface, and the side surface is an arc surface. In this way, stress at an outer edge of the glass can be reduced, which helps increase bending strength of the glass, thereby helping further reduce a crease in the bendable region of the screen.

According to a second aspect, this application provides a preparation method for glass. The preparation method includes: providing a glass substrate, where a Young's modulus of the glass substrate is greater than or equal to 90 GPa; and performing thinning processing on the glass substrate to thin the glass substrate to a target thickness to obtain first glass, where the first glass includes a first surface and a second surface that are opposite to each other in a thickness direction of the first glass, and surface roughness of the first surface and/or the second surface is greater than or equal to 3 nm and less than or equal to 100 nm.

According to the preparation method for glass in an embodiment of this application, the Young's modulus of the glass substrate is set to be greater than or equal to 90 GPa, and the surface roughness Ra of the first surface and/or the second surface of the glass (namely, the first glass) obtained after thinning processing is controlled to be greater than or equal to 3 nm and less than or equal to 100 nm. On the one hand, rigidity and impact resistance performance of the prepared glass can be improved, helping reduce deformation of the glass, improve a deformation resistance capability of a cover structure including the glass, and improve a capability of the cover structure to recover to an original shape after deformation. Therefore, a crease in a bendable region of a screen can be reduced to better protect the screen. On the other hand, while ensuring optical performance of the glass, adhesion between a surface of the glass (namely, the first surface and the second surface mentioned above) and an organic material can be increased, and a risk that the organic material attached to the surface of the glass is peeled off from the glass can be reduced or even avoided. Therefore, deformation of the organic material in a folding process can be reduced, to reduce creases of the cover structure and the screen. In addition, the preparation method is simple and easy to implement.

In a possible implementation of the second aspect, a method for performing thinning processing on the glass substrate includes one or more of chemical thinning, mechanical grinding and polishing, and chemical mechanical polishing.

In a possible implementation of the second aspect, after the first glass is obtained, the preparation method further includes: performing edge processing on the first glass, so that a side surface of the first glass is formed into an arc surface. In this way, the side surface of the glass prepared by using the preparation method can be formed into an arc surface, so that stress at an edge of the glass can be reduced, which helps increase bending strength of the glass, thereby helping further reduce a crease in the bendable region of the screen.

In a possible implementation of the second aspect, the performing edge processing on the first glass includes: performing chemical corrosion processing on an edge of the first glass.

In a possible implementation of the second aspect, the performing edge processing on the first glass includes: performing heat treatment on the first glass.

In a possible implementation of the second aspect, after the thinning processing is performed on the glass substrate, and after the first glass is obtained, the preparation method further includes: performing chemical strengthening processing on the first glass to form an ion exchange layer on a surface of the first glass. Chemical strengthening processing is performed on the first glass. On the one hand, specific compressive stress can be obtained on the surface of the prepared glass. When the glass is subjected to an external force, first, the compressive stress on the surface of the glass needs to be offset, and then the glass is in a tension state. In this way, a capability of the glass to resist an external force is improved, and strength of the glass is significantly increased, so that a deformation resistance capability of the glass and a capability to recover to an original shape after deformation can be significantly improved. Therefore, a crease in the bendable region of the screen can be reduced to better protect the screen. On the other hand, after chemical strengthening is performed on the first glass, the ion exchange layer with a specific depth is formed on the surface of the prepared glass. In this way, even if a crack is formed on the surface of the glass due to an external force, the formed ion exchange layer can effectively eliminate or suppress further propagation of the crack. Therefore, a capability of the glass to resist an external force is greatly improved, so that strength of the prepared glass is greatly enhanced.

In a possible implementation of the second aspect, after the first glass is obtained, the preparation method further includes: performing chemical polishing processing on the first glass. In this way, surface uniformity of the prepared glass can be increased, helping further increase mechanical strength of the glass.

According to a third aspect, this application provides a cover structure, and the cover plate includes the glass in any one of the foregoing technical solutions.

In a possible implementation of the third aspect, the cover structure further includes a protective layer, and the protective layer is fixedly connected to a first surface or a second surface of the glass.

In a possible implementation of the third aspect, a peel force between the protective layer and the glass is greater than or equal to 18 N/cm.

In a possible implementation of the third aspect, the protective layer is bonded to the glass by using an optically clear adhesive, or the protective layer is coated on a surface of the glass.

According to a fourth aspect, this application provides an electronic device, and the electronic device includes a screen. The screen includes a display screen and a cover structure that are stacked, the cover structure is located on a side toward which a display surface of the display screen faces, and the cover structure is the cover structure in any one of the foregoing technical solutions.

In a possible implementation of the fourth aspect, a peel force between the display screen and the cover structure is greater than or equal to 18 N/cm.

In a possible implementation of the fourth aspect, the electronic device further includes a housing assembly. The housing assembly includes a first housing, a second housing, and a rotating shaft mechanism, the first housing is rotatably connected to one side of the rotating shaft mechanism, and the second housing is rotatably connected to the other side of the rotating shaft mechanism; and the screen includes a first display region, a second display region, and a third display region, the third display region is connected between the first display region and the second display region, the first display region is provided on the first housing, the second display region is provided on the second housing, and the third display region is provided on the rotating shaft mechanism.

According to a fifth aspect, this application provides an application of the glass according to any one of the foregoing technical solutions or the glass prepared by using the preparation method in any one of the foregoing technical solutions on a cover structure, a screen, and an electronic device.

For the technical effects brought by any one of the design manners in the second aspect to the fifth aspect, refer to the technical effects brought by different design manners in the first aspect. Details are not described herein again.

### BRIEF DESCRIPTION OF DRAWINGS

FIG. 1 is a three-dimensional view of an electronic device according to some embodiments of this application;
FIG. 2 is a schematic diagram of a partial exploded structure of the electronic device shown in FIG. 1;
FIG. 3 is a schematic diagram of a structure of the electronic device shown in FIG. 1 when in a folded state;
FIG. 4 is a cross-sectional view of a screen in an electronic device according to some embodiments of this application;
FIG. 5 is a schematic diagram of a stacked layer structure of a cover structure according to some embodiments of this application;
FIG. 6 is a schematic diagram of a structure of glass according to some embodiments of this application;
FIG. 7A is a schematic diagram of a structure of the glass shown in FIG. 6 in a different display ratio;
FIG. 7B is a schematic diagram of microstructures according to some other embodiments of this application;
FIG. 8 shows a scan image obtained by scanning a first surface of the glass shown in FIG. 6 by using an atomic force microscope (AFM);
FIG. 9 is a schematic diagram of glass in a bent state according to some embodiments of this application;
FIG. 10 is a flowchart of a preparation method for glass according to some embodiments of this application;
FIG. 11 is a flowchart of a preparation method for glass according to some other embodiments of this application;
FIG. 12 is a flowchart of a preparation method for glass according to still some other embodiments of this application;
FIG. 13 is a flowchart of a preparation method for glass according to still some other embodiments of this application; and
FIG. 14 is a schematic diagram of a stacked layer structure of a screen according to some embodiments of this application.

### Reference numerals:

100. electronic device;
10. housing assembly; 11. first housing; 12. second housing; 13. rotating shaft mechanism;
20. screen; 21. first display region; 22. second display region; 23. third display region;
201. support structure;
202. display screen; 202a. display surface;
203. cover structure; 203a. main body layer; 203b. protective layer;
204. glass; 204a. first surface; 204b. second surface; 204c. side surface; 204d. microstructure; 204e. ion exchange layer; 2041. first portion; 2042. second portion; 2043. third portion;
204A. first glass; 204B. second glass; 204C. third glass;
205. glass substrate; 205a. first face; 205b. second face;
206. optically clear adhesive;
300. protective film.

### DESCRIPTION OF EMBODIMENTS

In the embodiments of this application, words such as "example" or "for example" are used to represent giving an example, an illustration, or a description. Any embodiment or design solution described as "example" or "for example" in the embodiments of this application should not be construed as being more preferred or advantageous than other embodiments or design solutions. Exactly, use of the words such as "example" or "for example" is intended to present related concepts in a specific manner.

In the embodiments of this application, the terms "first" and "second" are merely used for the purpose of description, and should not be understood as an indication or implication of relative importance or an implicit indication of a quantity of indicated technical features. Therefore, a feature defined with "first" or "second" may explicitly or implicitly include one or more such features.

In the description of the embodiments of this application, the term "at least one" means one or more, and "a plurality of" means two or more. "At least one of the following items" or a similar expression thereof means any combination of these items, including a single item or any combination of a plurality of items. For example, at least one of a, b, or c may represent a, b, c, a-b, a-c, b-c, or a-b-c, where a, b, and c may be singular or plural.

In the description of the embodiments of this application, the term "and/or" is merely used to describe an association relationship between associated objects, and represents that three relationships may exist. For example, A and/or B may represent the following three cases: Only A exists, both A and B exist, and only B exists. In addition, the character "/" in this application usually represents an "or" relationship between associated objects.

In the description of the embodiments of this application, it should be noted that unless otherwise specified and defined explicitly, the terms "mount", "connect", and "connection" should be understood in a broad sense. For example, "connection" may be a detachable connection or a non-detachable connection; or may be a direct connection or an indirect connection through an intermediate medium. A "fixed connection" means that there is a mutual connection and a relative position relationship remains unchanged after the connection. A "rotatable connection" means that there is a mutual connection and relative rotation can be implemented after the connection. A "slidable connection" means that there is a mutual connection and relative sliding can be implemented after the connection.

Orientation terms such as "inside", "outside", "upper", "lower", "front", "rear", "left", and "right" mentioned in embodiments of this application are merely directions in the accompanying drawings. Therefore, the used orientation terms are intended for better and clearer description and understanding of embodiments of this application, and are not intended for indicating or implying that an indicated apparatus or element needs to have a specific orientation or constructed and operated in a specific orientation, and therefore should not be construed as limitations on embodiments of this application.

In the descriptions of embodiments of this application, the term "include", "comprise", or any other variant thereof is intended to cover non-exclusive inclusion, so that a process, method, article, or apparatus that includes a series of elements includes not only those elements but also other elements that are not explicitly listed, or includes elements inherent to such a process, method, article, or apparatus. Without more limitation, an element defined by the sentence "including a... " does not exclude existence of other identical elements in the process, method, article, or apparatus including the element.

An embodiment of this application provides an electronic device, and a cover structure of the electronic device includes glass. In the electronic device in this embodiment of this application, surface roughness of at least one of two surfaces (namely, a first surface and a second surface mentioned below) of the glass that are opposite to each other in a thickness direction of the glass is set to 3 nm~100 nm, and a Young's modulus of the glass is set to be greater than or equal to 90 GPa, so that an impact resistance capability of the electronic device can be improved. In addition, when the electronic device is a foldable electronic device, a crease generated when the electronic device bends can be effectively reduced.

Specifically, the electronic device in this embodiment of this application includes but is not limited to a mobile phone, a tablet personal computer (tablet personal computer), a laptop computer (laptop computer), a personal digital assistant (personal digital assistant, PDA), a personal computer, a notebook computer, an onboard device, a wearable device, a personal stereo, a radio, or the like. The wearable device includes but is not limited to a smart band, a smartwatch, a smart head-mounted display, smart glasses, or the like.

The electronic device may be a foldable electronic device. For the foldable electronic device, under different usage requirements, the foldable electronic device may be unfolded to an unfolded state, or may be folded to a folded state. Certainly, the electronic device may alternatively be a non-foldable electronic device. In this embodiment and the following embodiments, an example in which the electronic device is a foldable electronic device is used for description. Specifically, the foldable electronic device may be a foldable mobile phone.

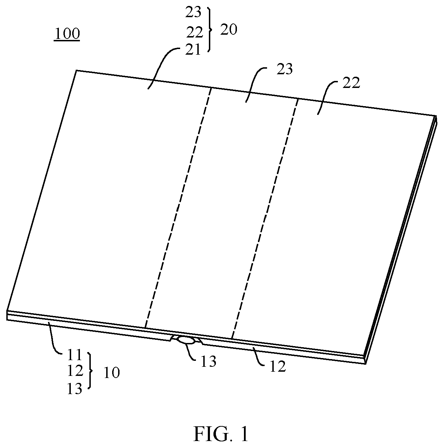

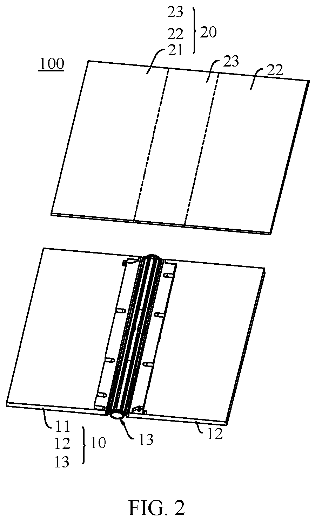

Refer to FIG. 1 and FIG. 2. FIG. 1 is a three-dimensional view of an electronic device 100 according to some embodiments of this application. The electronic device 100 shown in FIG. 1 is in an unfolded state. FIG. 2 is a schematic diagram of a partial exploded structure of the electronic device 100 shown in FIG. 1. The electronic device 100 includes a housing assembly 10 and a screen 20. It may be understood that FIG. 1 shows only some example components included in the electronic device 100, and actual shapes, actual sizes, actual positions, and actual structures of these components are not limited by FIG. 1.

The housing assembly 10 is configured to protect an internal electronic component of the electronic device 100, and is configured to bear the screen 20. Referring to FIG. 1-FIG. 2, the housing assembly 10 includes a first housing 11, a second housing 12, and a rotating shaft mechanism 13. The rotating shaft mechanism 13 is connected between the first housing 11 and the second housing 12. The first housing 11 and the second housing 12 are rotatably connected to each other by using the rotating shaft mechanism 13, to implement relative rotation between the first housing 11 and the second housing 12, to support the screen 20 to be folded between an unfolded state and a folded state. A first accommodating cavity (not shown in FIG. 1-FIG. 2) is formed inside the first housing 11. A second accommodating cavity (not shown in FIG. 1-FIG. 2) is formed inside the second housing 12. The first accommodating cavity and the second accommodating cavity are configured to accommodate electronic components such as a circuit board, a camera module, a speaker module, and a battery of the electronic device 100.

The screen 20 is configured to display information and provide an interaction interface for a user. The screen 20 in this embodiment can switch between an unfolded state and a folded state. Specifically, refer to FIG. 1-FIG. 2. The screen 20 includes a first display region 21, a second display region 22, and a third display region 23, and the third display region 23 is connected between the first display region 21 and the second display region 22. The first display region 21 covers the first housing 11, the second display region 22 covers the second housing 12, and the third display region 23 covers the rotating shaft mechanism 13.

At least the third display region 23 of the screen 20 is made of a flexible material. The first display region 21 and the second display region 22 may be made of a flexible material, or may be made of a rigid material, or a part of the first display region and the second display region is made of a rigid material, and the other part thereof is made of a flexible material. This is not specifically limited herein. In some embodiments, the entire screen 20 is made of a flexible material. In this way, manufacturing is convenient and costs are relatively low.

Referring to FIG. 1, when the electronic device 100 is in an unfolded state, the first display region 21, the second display region 22, and the third display region 23 of the screen 20 are disposed in a same plane with a same orientation. In this state, large-screen display can be implemented, to provide richer information for the user and bring better user experience to the user.

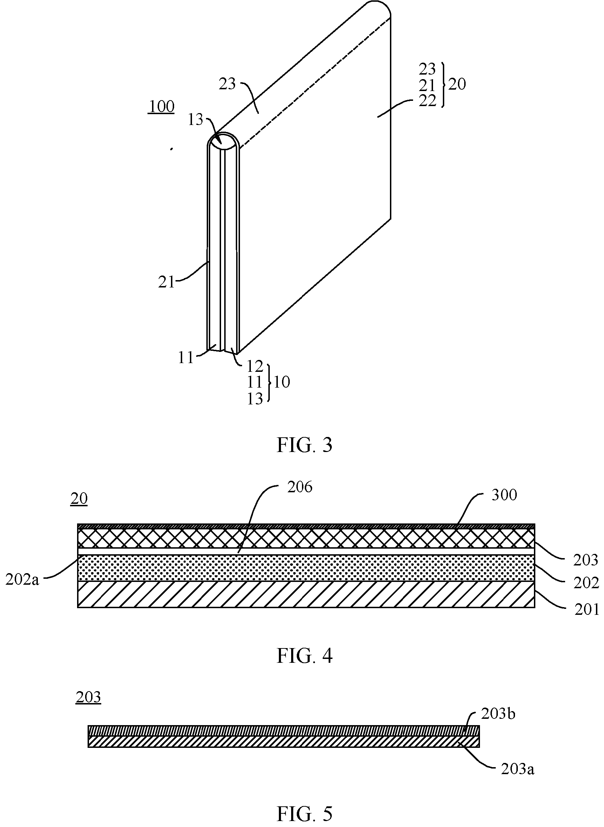

Refer to FIG. 3. FIG. 3 is a schematic diagram of a structure of the electronic device 100 shown in FIG. 1 in a folded state. When the electronic device 100 is in a folded state, the screen 20 is also in a folded state. Specifically, the third display region 23 of the screen 20 is in a bent state, the first display region 21 is approximately parallel to and opposite to the second display region 22, and the housing assembly 10 is located between the first display region 21 and the second display region 22. To be specific, an included angle between the first display region 21 and the second display region 22 is 360° or approximately 360°, and an included angle between the first housing 11 and the second housing 12 is also 360° or approximately 360°. In this state, the electronic device 100 has a relatively small volume, which is easy to carry, and may implement small-screen display by using at least one of the first display region 21 and the second display region 22.

When the electronic device 100 in this embodiment is in a folded state, the screen 20 is located on an outer side of the housing assembly 10. In this case, the foldable mobile phone is an inward folded mobile phone. In another embodiment, when the electronic device 100 is in a folded state, the housing assembly 10 may alternatively protect the screen 20 outside the screen 20, and the screen 20 is not visible to the user. In this case, the foldable mobile phone is an inward folded mobile phone. In this way, a size of the electronic device 100 can also be reduced, to facilitate storage and carrying of the electronic device 100, and prevent the screen 20 from being scratched by a hard object.

Refer to FIG. 4. FIG. 4 is a cross-sectional view of a screen 20 in an electronic device 100 according to some embodiments of this application. The screen 20 includes a support structure 201, a display screen 202, and a cover structure 203 that are stacked. The "stacking" in this embodiment of this application refers to stacking layer structures in thickness directions of the layer structures. In this case, the layer structures may be stacked through directly contacting, or another layer structure may be included.

The display screen 202 is configured to display information such as an image and a video. Specifically, the display screen 202 has a display surface 202a used to display image information, and the display surface 202a of the display screen 202 is exposed, to present the information such as an image or a video to a user. For example, the display screen 202 may be an organic light-emitting diode (organic light-emitting diode, OLED) display screen, an active-matrix organic light-emitting diode or an active-matrix organic light-emitting diode (active-matrix organic light-emitting diode, AMOLED) display screen, a mini light-emitting diode (mini light-emitting diode) display screen, a micro light-emitting diode (micro light-emitting diode) display screen, a micro organic light-emitting diode (micro organic light-emitting diode) display screen, a quantum dot light emitting diode (quantum dot light emitting diodes, QLED) display screen, or the like.

The support structure 201 is disposed on a side of the display screen 202 facing away from the display surface 202a. The support structure 201 and the display screen 202 are stacked and fixedly connected to each other by using an adhesive or the like. The support structure 201 is also referred to as a carbon fiber support plate, and is configured to increase structural strength of the screen 20. In addition, the support structure 201 may be folded together with the display screen 202. The support structure 201 may be in a sheet shape, and a material of the support structure 201 includes but is not limited to metal and a composite material that includes a fiber material.

The cover structure 203 is disposed on a side toward which the display surface 202a of the display screen 202 faces. The cover structure 203 and the display screen 202 are stacked. A user of the cover structure 203 can protect the display screen 202 and prevent dust. In addition, the cover structure 203 may be folded together with the display screen 202. The cover structure 203 and the display screen 202 may be fixedly connected to each other by using an optically clear adhesive 206 (optically clear adhesive, OCA). The optically clear adhesive 206 is colorless and transparent, has high light transmittance and good bonding strength, can be cured at a room temperature or a medium temperature, and has small curing shrinkage and another characteristics. Therefore, optical performance of the screen 20 can be ensured. The optically clear adhesive 206 may include one or more of a silicone polymer, acrylic resin, unsaturated polyester, polyurethane, and epoxy resin.

In some embodiments, refer to FIG. 5. FIG. 5 is a schematic diagram of a stacked layer of a cover structure 203 according to some embodiments of this application. The cover structure 203 includes a main body layer 203a and a protective layer 203b that are stacked. The protective layer 203b is located on a side of the main body layer 203a facing away from the display screen 202.

In some embodiments, to ensure bending performance and optical performance of the cover structure 203, a material of the main body layer 203a may be ultra thin glass (ultra thin glass, UTG). The ultra thin glass refers to flexible glass with a glass thickness less than 100 µm, and can implement bending and folding of the cover structure 203. In addition, the ultra thin glass has relatively good optical performance and a relatively high elastic modulus. Both light transmittance and hardness of the cover structure 203 can be considered, and a self-repairing capability of a crease is good, which helps reduce a crease of the screen 20.

Referring to FIG. 5, the protective layer 203b is fixedly connected to a side surface of the main body layer 203a facing away from the display screen 202. The protective layer 203b is configured to protect the main body layer 203a, so that a scratch can be avoided on the main body layer 203a. In addition, the protective layer 203b can further reduce a probability that the main body layer 203a is broken due to impact and glass fragments fly after breaking. In some embodiments, the protective layer 203b may be an organic polymer layer. The organic polymer layer includes but is not limited to one or more of a polyethylene terephthalate (polyethylene terephthalate, PET) plastic, organic silicone resin, epoxy resin, acrylic resin, a phenolic plastic, phenolic resin, an amino plastic, urea resin, hard plastic reaction resin, melamine formaldehyde resin, unsaturated polyester resin, vinyl ester resin, phenylene acrylate resin, diallyl phthalate resin, crosslinked polyurethane resin, polymethacrylate reaction resin, polyacrylate reaction resin, acrylic-siloxane hybrid, epoxy-silicone hybrid, transparent polyimide, and the like.

The protective layer 203b may be fixedly connected to the main body layer 203a by using the optically clear adhesive 206 (not shown in FIG. 5), or may be directly coated on the main body layer 203a. It may be understood that, in another embodiment, the cover structure 203 may not include the protective layer 203b.

On this basis, to improve scratch resistance performance, fingerprint resistance performance, and the like of the cover structure 203, a protective film 300 may be disposed on a side of the cover structure 203 facing away from the display screen 202. The protective film 300 may be bonded to the cover structure 203.

In the cover structure 203 in the foregoing embodiment, the ultra thin glass is used as a material of the main body layer 203a of the cover structure 203, which can reduce a crease in a bendable region (namely, the third display region 23) of the screen 20 to some extent. However, mechanical strength of the ultra thin glass in a related technology is still insufficient, and consequently the cover structure 203 has an insufficient deformation resistance capability and an insufficient capability of recovering to an original shape after deformation. In this case, in a folding process, the screen 20 still generates a crease in the bendable region of the screen 20. In addition, an organic material (for example, the OCA and the organic polymer layer) in the cover structure 203 is prone to plastic deformation, which is an important reason that the bendable region of the screen 20 is prone to form a crease.

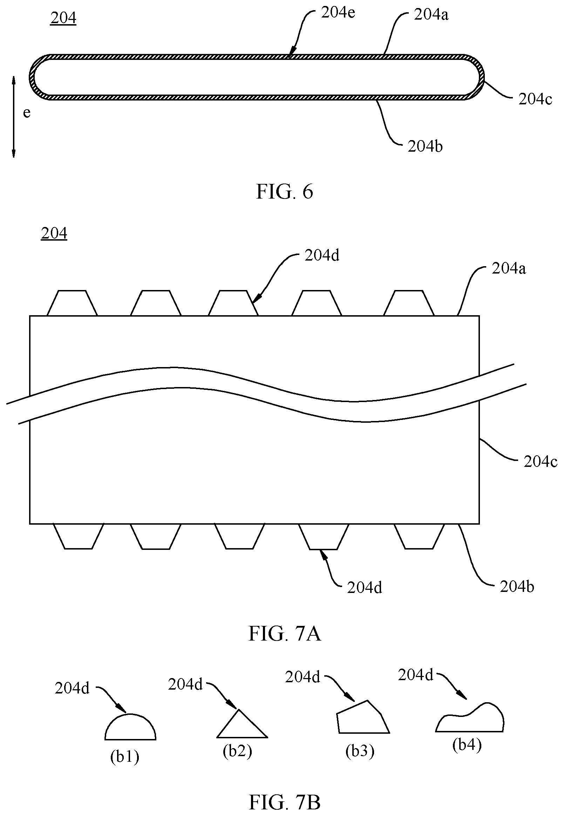

To resolve the foregoing technical problem, refer to FIG. 6. FIG. 6 is a schematic diagram of a structure of glass 204 according to some embodiments of this application. The glass 204 may be used for the cover structure 203. For example, the glass 204 may be used for the main body layer 203a of the cover structure 203. Specifically, a Young's modulus of the glass 204 is greater than or equal to 90 GPa. Further, the Young's modulus of the glass 204 may be greater than or equal to 100 GPa. Furthermore, the Young's modulus of the glass 204 is greater than or equal to 110 GPa. For example, the Young's modulus of the glass 204 may be 90 GPa, 91 GPa, 92 GPa, 95 GPa, 98 GPa, 100 GPa, 105 GPa, 108 GPa, 110 GPa, 112 GPa, 115 GPa, 120 GPa, or the like. In this way, the Young's modulus of the glass 204 is set to be greater than or equal to 90 GPa, so that rigidity and impact resistance performance of the glass 204 can be improved, helping reduce deformation of the glass 204, and improve a deformation resistance capability of the cover structure 203 and a capability of the cover structure 203 to recover to an original shape after deformation. Therefore, a crease in the bendable region of the screen 20 can be reduced to better protect the screen 20.

Experimental results show that, with a same stacked layer structure of the cover structure 203, a crease depth in the bendable region of the screen 20 is obviously reduced as the Young's modulus of the glass 204 increases.

On this basis, referring to FIG. 6, the glass 204 includes a first surface 204a, a second surface 204b, and a side surface 204c. The first surface 204a and the second surface 204b are disposed opposite to each other in a thickness direction (for example, a direction e in FIG. 6) of the glass 204, and the side surface 204c is connected between the first surface 204a and the second surface 204b. In some embodiments, the first surface 204a faces the display screen 202, and the second surface 204b faces away from the display screen 202. For example, the first surface 204a may be fixedly connected to the display screen 202 by using the optically clear adhesive 206. The second surface 204b may be fixedly connected to the protective layer 203b by using the optically clear adhesive 206. Alternatively, the protective layer 203b may be coated on the second surface 204b. Certainly, it may be understood that, in another embodiment, the second surface 204b may face the display screen 202, and the first surface 204a faces away from the display screen 202.

In this embodiment, surface roughness Ra of the first surface 204a and the second surface 204b is greater than or equal to 3 nm and less than or equal to 100 nm. In other words, the surface roughness Ra of the first surface 204a and the second surface 204b is greater than or equal to 3 nm~100 nm. Further, surface roughness Ra values of the first surface 204a and the second surface 204b are greater than or equal to 3 nm and less than or equal to 80 nm. Furthermore, the surface roughness Ra values of the first surface 204a and the second surface 204b are greater than or equal to 15 nm and less than or equal to 80 nm. For example, the surface roughness Ra of the first surface 204a and the second surface 204b may be 3 nm, 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, or the like. The surface roughness refers to a relatively small spacing between surfaces and unevenness of micro peaks and valleys. A distance (a wave distance) between two peaks or two valleys is extremely small (usually less than 1 mm), which is a micro-geometric shape error. Smaller surface roughness indicates a smoother surface.

The surface roughness may be measured with reference to GB/T32642-2016 "flat panel displays glass substrate surface roughness measurement method". Specifically, in this embodiment, the surface roughness may be measured by using a stylus-type surface roughness meter. A measurement process is as follows: taking a piece of to-be-tested sample and place it on a platform of the stylus-type surface roughness meter, where the to-be-tested sample cannot be bent, and is placed for 5 minutes or longer time to ensure that a temperature of the to-be-tested sample is consistent with a room temperature; placing a test pin on a surface of the to-be-tested sample, and mark an initial measurement position; adjusting a test probe by pressing a coordinate adjustment lever; after the test pin is in complete contact with the initial measurement on the surface of the to-be-tested sample, controlling the test pin to move along the surface of the to-be-tested sample, and measuring an actual profile parallel surface to obtain a real profile and a corresponding filtering curve of the to-be-tested sample, where a movement speed of the measurement pin is 0.3 mm/min, and a measurement length is 100 mm; and after the test, reading out a surface roughness value on the stylus-type surface roughness meter.

Refer to FIG. 7A. FIG. 7A is a schematic diagram of a structure of the glass 204 shown in FIG. 6 in a different display ratio. Uneven microstructures 204d are formed on each of the first surface 204a and the second surface 204b of the glass 204. Due to existence of the microstructures 204d, the surface roughness Ra of the first surface 204a and the second surface 204b may be 3 nm~100 nm.

It may be understood that each of the first surface 204a and the second surface 204b of the glass 204 may include a plurality of microstructures 204d, and shapes of the plurality of microstructures 204d may be the same or different. When the shapes of the plurality of microstructures 204d are the same, referring to FIG. 7A, the shapes of the microstructures 204d may be a prism shape. Certainly, the shape of the microstructure 204d may be another shape. For example, refer to FIG. 7B. FIG. 7B is a schematic diagram of microstructures 204d according to some other embodiments of this application. As shown in (b1) in FIG. 7B, a shape of the microstructure 204d may be a hemispherical shape. As shown in (b2) in FIG. 7B, the shape of the microstructure 204d may alternatively be a triangle (also referred to as a pyramid). As shown in (b3) and (b4) in FIG. 7B, shapes of the microstructures 204d may be irregular shapes.

When the shapes of the plurality of microstructures 204d are different, the shapes of the plurality of microstructures 204d may include but are not limited to at least two of a prism shape, a hemispherical shape, a triangle, and an irregular shape.

In some embodiments, the microstructure 204d may be formed in the following thinning processing process, or may be formed in another manner such as laser etching, provided that the surface roughness Ra of the first surface 204a and the second surface 204b is 3 nm~100 nm.

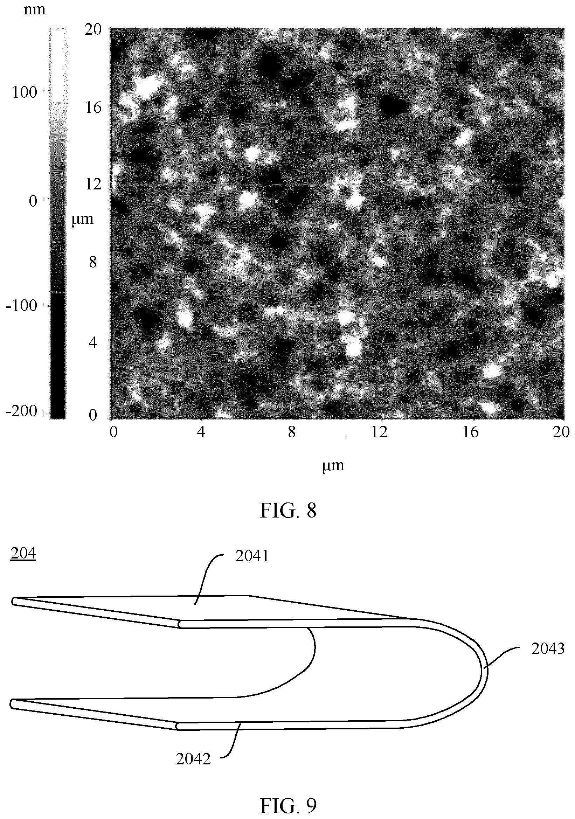

Refer to FIG. 8. FIG. 8 shows a scan image obtained by scanning the first surface 204a of the glass 204 shown in FIG. 6 by using an atomic force microscope (AFM). It can be learned from FIG. 8 that the first surface 204a of the glass 204 presents an uneven microstructure morphology.

In this way, the surface roughness Ra of the first surface 204a and the second surface 204b is set to 3 nm~100 nm, so that a contact area between an organic material (for example, the optically clear adhesive 206 and the organic polymer layer mentioned above) and each of the first surface 204a and the second surface 204b can be increased, adhesion between the organic material and each of the first surface 204a and the second surface 204b can be increased, and a risk that the organic materials attached to the first surface 204a and the second surface 204b are peeled off from the first surface 204a and the second surface 204b can be reduced or even avoided. Therefore, deformation of the organic material in a folding process can be reduced, to reduce creases of the cover structure 203 and the screen 20. In addition, the surface roughness Ra of the first surface 204a and the second surface 204b is set to 3 nm~100 nm, so that haze of the glass 204 can be reduced, transmittance of the glass 204 can be increased, optical performance of the glass 204 can be ensured. Therefore, optical performance of the cover junction can be further ensured.

It may be understood that, in another embodiment, the surface roughness Ra of only one of the first surface 204a and the second surface 204b may be set to 3 nm~100 nm. In this way, deformation of the organic material in a folding process can also be reduced to some extent, thereby reducing creases of the cover structure 203 and the screen 20, and ensuring optical performance of the glass 204.

Therefore, for the glass 204 in this embodiment of this application, the Young's modulus of the glass 204 is set to be greater than or equal to 90 GPa, and the surface roughness Ra of at least one of the first surface 204a and the second surface 204b of the glass 204 is set to 3 nm~100 nm, which has a beneficial effect on resisting crease generation and crease recovery. When the glass 204 is applied to the cover structure 203 of the screen 20, the crease in the bendable region of the screen 20 can be effectively reduced, and display aesthetics of the screen 20 can be improved.

Still referring to FIG. 6, in some embodiments, the side surface 204c of the glass 204 is formed into an arc surface. Specifically, the side surface 204c of the glass 204 is formed into a circular arc surface. For example, a central angle of the circular arc surface is 180 degrees, that is, the circular arc surface is a semi-circular arc surface. It may be understood that, in another embodiment, the side surface 204c of the glass 204 may be further formed into an elliptical arc surface, an inferior arc surface, or the like. In addition, a shape of the side surface 204c of the glass 204 in this embodiment of this application may be combined with the glass 204 in any one of the foregoing embodiments.

In some embodiments, an edge of the glass 204 may be chemically corroded, so that the side surface 204c of the glass 204 forms an arc surface. In some other embodiments, the foregoing arc surface may alternatively be formed by surface tension of the glass 204 in a process of performing heat treatment on the glass 204.

For the glass 204 in this embodiment, the side surface 204c of the glass 204 is set to an arc surface, so that stress at an edge position of the glass 204 can be reduced, and bending strength of the glass 204 can be increased, thereby helping further reduce a crease in the bendable region of the screen 20.

In some embodiments, a thickness of the glass 204 is greater than or equal to 0.02 mm and less than or equal to 0.1 mm. In other words, the thickness of the glass 204 is 0.020 mm~0.100 mm. The glass 204 is ultra thin glass. Further, the thickness of the glass 204 is greater than or equal to 0.02 mm and less than or equal to 0.05 mm. For example, the thickness of the glass 204 may be 0.02 mm, 0.03 mm, 0.04 mm, 0.05 mm, 0.06 mm, 0.07 mm, 0.08 mm, 0.09 mm, 0.1 mm, or the like. In this way, both bending performance and mechanical strength of the glass 204 can be considered.

In some embodiments, the glass 204 is nanocrystal glass. In other words, a material of the glass 204 in this embodiment of this application is nanocrystal glass. Nanocrystal glass is obtained as follows: Crystallization heat treatment is performed, in a specific temperature system, on base glass with specific composition in which a nucleating agent is added (or no nucleating agent is added), to uniformly precipitate a large quantity of tiny crystals in the glass, so that a dense multiphase complex with a microcrystalline phase and a glass phase is formed. The nanocrystal glass, like ceramic, includes crystals, and atomic arrangement of the crystals is regular. Therefore, the nanocrystal glass has a relatively high Young's modulus and relatively strong mechanical strength. In this way, the glass 204 is processed by using the nanocrystal glass, so that it can be ensured that the glass 204 has a relatively high Young's modulus, helping further improve rigidity of the glass 204. Therefore, deformation resistance capabilities of the glass 204 and the cover structure 203, and capabilities of the glass 204 and the cover structure 203 to recover to original shapes after deformation can be further improved, to reduce a crease in the bendable region of the screen 20.

To ensure optical performance of the nanocrystal glass on a basis of ensuring mechanical performance of the nanocrystal glass, and reduce processing difficulty of the nanocrystal glass, and further ensure mechanical performance and optical performance of the glass 204, in some embodiments, a primary crystalline phase of the nanocrystal glass includes one or more of spodumene, petalite, lithium silicate, lithium disilicate, β-quartz, zirconium oxide, spinel, and zinc spinel. The primary crystalline phase of the nanocrystal glass is a crystalline phase that has significant impact on performance of the nanocrystal glass. In an X-ray diffraction (XRD) pattern of the glass, a peak profile of the primary crystalline phase is relatively obvious. There may be one or more types of primary crystalline phases. For example, there are one or two types of primary crystalline phases.

In some embodiments, a mass fraction of the primary crystalline phase is greater than or equal to 50%, and further, the mass fraction of the primary crystalline phase is greater than or equal to 70%. The mass fraction of the primary crystalline phase is equal to a mass of the primary crystalline phase divided by a sum of masses of all crystalline phases in the nanocrystal glass (also referred to as a mass of the total crystalline phase). For example, the mass fraction of the primary crystalline phase may be 50%, 55%, 60%, 65%, 70%, 75%, 78%, 80%, 82%, 83%, 85%, or the like. In this way, the mass fraction of the primary crystalline phase is controlled to be not less than 50%, so that purity of the primary crystalline phase can be increased, and a quantity of times of scattering between different crystalline phases can be reduced. Therefore, transmittance of the nanocrystal glass can be increased, haze of the nanocrystal glass can be reduced, and optical performance of the nanocrystal glass can be improved, to help improve optical performance of the glass 204, the cover structure 203, and the screen 20.

For example, in some embodiments, the primary crystalline phase of the nanocrystal glass is lithium disilicate, and a secondary crystalline phase thereof includes at least one of petalite, lithium metasilicate, zirconium salt, and phosphate crystal. The "secondary crystalline phase" in this application is another crystalline phase other than the primary crystalline phase.

In some embodiments, an average crystalline phase particle size (namely, an average grain size) of the nanocrystal glass is less than or equal to 80 nm. For example, the average crystalline phase particle size of the nanocrystal glass is less than or equal to 60 nm, or the average crystalline phase particle size of the nanocrystal glass is less than or equal to 40 nm, or the average crystalline phase particle size of the nanocrystal glass is less than or equal to 30 nm. The foregoing nanocrystal glass has a small average crystalline phase particle size, so that it can be ensured that average transmittance of the nanocrystal glass is high and haze thereof is small. Therefore, the nanocrystal glass has excellent optical performance, and optical performance of the glass 204 and the cover structure 203 can be further ensured.

The average crystalline phase particle size is an average value of crystalline phase particle sizes. The average crystalline phase particle size may be determined through measurement by using an SEM scanning electron microscope and an X-ray diffractometer (XRD).

Further, the average crystalline phase particle size of the nanocrystal glass is greater than or equal to 5 nm. For example, the average crystalline phase particle size of the nanocrystal glass is 5 nm~80 nm, or the average crystalline phase particle size of the nanocrystal glass is 5 nm~70 nm, or the average crystalline phase particle size of the nanocrystal glass is 5 nm~60 nm, or the average crystalline phase particle size of the nanocrystal glass is 5 nm~40 nm, or the average crystalline phase particle size of the nanocrystal glass is 5 nm~30 nm. If the average crystalline phase particle size of the nanocrystal glass is extremely small, it affects impact resistance performance of the nanocrystal glass. Therefore, the average crystalline phase particle size of the nanocrystal glass is controlled to be not less than 5 nm, so that both optical performance and impact resistance performance of the nanocrystal glass can be considered.

To further improve mechanical performance of the glass 204, increase hardness of the glass 204, and improve a deformation resistance capability thereof, in some embodiments, referring to FIG. 6, an ion exchange layer 204e is formed on a surface of the glass 204. The ion exchange layer 204e is shown on a surface of a third glass 204C by using a shadow part. The ion exchange layer 204e may be formed by performing chemical strengthening processing on the glass 204. The ion exchange layer 204e is formed on the surface of the glass 204, so that further propagation of a crack in the glass can be effectively eliminated or suppressed. Therefore, a capability of the glass 204 to resist an external force is greatly improved, strength of the glass 204 is significantly increased.

Chemical strengthening (also referred to as ion exchanging) is usually referred to as chemical tempering. A main principle of chemical strengthening is to exchange ions with a relatively large radius (for example, K ions) in molten salt with ions with a relatively small radius (for example, Na ions) in glass, to form a layer of compressive stress on a surface of the glass by a "stuffing effect", and to form the ion exchange layer 204e (also referred to as a compressive stress layer) with a specific depth. In an actual processing process, chemical strengthening processing may be performed on the glass 204 once, or chemical strengthening processing may be performed on the glass 204 twice.

Fracture of glass is usually caused by tensile stress of a crack exceeding a tolerance range of the crack. When the glass is subjected to an external force, a crack on a surface of the glass extends not only around but also inside the glass. Stress to which a crack tip is subjected depends on the following formula: σᵣ₌2σ₀(a/r)^{1/2}, where a is a surface crack depth, and σ₀ is tensile stress applied longitudinally; and when the crack tip propagates forward, stress at a distance r in a propagation direction is σr. It may be seen that the stress to which the crack tip is subjected is much higher than σ₀. For a given glass sample, if a distance r and stress σᵣ that play a decisive role when the glass sample fractures are fixed, σ₀(a/r)^{1/2} is a constant, which indicates that the tensile stress σ₀ that the glass can withstand when the glass fractures is inversely proportional to a square root of the crack depth a. In other words, if a depth of a crack extending inside the glass can be effectively controlled (that is, a can be reduced), the tensile stress σ₀ that the glass can withstand increases accordingly, that is, mechanical strength of the glass increases accordingly.

Chemical strengthening is performed on the glass 204. On the one hand, the surface of the glass 204 can obtain some compressive stress. When the glass 204 is subjected to an external force, first, the compressive stress on the surface of the glass 204 needs to be offset, and then the glass 204 is in a tension state. On the other hand, after chemical strengthening is performed on the glass 204, the ion exchange layer 204e formed on the surface of the glass 204 can effectively eliminate or suppress crack propagation. Therefore, a capability of the glass 204 to resist an external force can be improved by performing chemical strengthening on the glass 204, so that strength of the glass 204 is significantly enhanced.

In some embodiments, the ion exchange layer 204e includes a K ion exchange layer, and a depth of the K ion exchange layer is 0.06 t~0.2 t, where t is a thickness of the glass 204. For example, when the thickness of the glass 204 is 0.03 mm, the depth of the K ion exchange layer 204e is 1.8 µm~6 µm. Further, the depth of the K ion exchange layer is 0.07 t~0.15 t. In this case, when the thickness of the glass 204 is 0.03 mm, the depth of the K ion exchange layer is 2.1 µm~4.5 µm. In this way, while increasing mechanical strength and hardness of the nanocrystal glass and improving a deformation resistance capability thereof, processing difficulty of the glass 204 can be reduced.

Specifically, the glass 204 in this embodiment of this application includes a Na element. In this case, K→Na ion exchanging can be performed on the glass 204 in a chemical strengthening process, so that Na ions in the glass 204 can be replaced with K ions in the molten salt to form the K ion exchange layer 204e.

On a basis of any one of the foregoing embodiments, the ion exchange layer 204e further includes a Na ion exchange layer, and a depth of the Na ion exchange layer is 0.1 t~0.25 t. For example, when the thickness of the glass 204 is 0.03 mm, the depth of the Na ion exchange layer is 4.5 µm~7.5 µm. Further, the depth of the Na ion exchange layer is 0.15 t~0.2 t. That is, the depth of the Na ion exchange layer is 4.5 µm~6 µm, where t is the thickness of the glass 204. In this way, mechanical strength and hardness of the glass 204 can be further increased, and a deformation resistance capability thereof can be further improved.

Specifically, the glass 204 in this embodiment of this application includes a Li element. In this case, Na→Li ion exchanging can be performed on the glass 204 in a chemical strengthening process, so that Li ions in the glass 204 can be replaced with Na ions in the molten salt to form the Na ion exchange layer.

It may be understood that the ion exchange layer 204e in the glass 204 may include only one of the K ion exchange layer and the Na ion exchange layer, or may include both the K ion exchange layer and the Na ion exchange layer.

Specifically, when the ion exchange layer 204e in the glass 204 includes only one of the K ion exchange layer and the Na ion exchange layer, the ion exchange layer 204e may be formed when chemical strengthening processing is performed on the glass 204 once. When the ion exchange layer 204e in the glass 204 includes both the K ion exchange layer and the Na ion exchange layer, the ion exchange layer 204e may be formed when chemical strengthening processing is performed on the glass 204 twice. For example, when chemical strengthening processing is performed on the glass 204 for a first time, most Li ions in the glass 204 may be exchanged with alkali metal ions in the molten salt with a relatively large ion radius. During chemical strengthening processing for a second time, most Na ions in the glass 204 may be exchanged with alkali metal ions in the molten salt with a relatively large ion radius. Through ion exchanging in two steps, the thickness and a surface pressure stress value of the ion exchange layer 204e in the glass 204 can be effectively increased.

The depth of the ion exchange layer 204e may be tested by analyzing an element content on the side surface 204c of the glass 204 by using an electron probe microanalysis (EPMA) or a scanning electron microscope-energy dispersive spectrometer (SEM-EDS). A process of testing the depth of the ion exchange layer by using the scanning electron microscope-energy dispersive spectrometer (SEM-EDS) is as follows: cutting a to-be-tested sample into a small piece of sample, and making a length of one of sides of the small piece of sample less than 5mm and an edge flat; using a vacuum coating instrument to evaporate a gold film on a surface of the small piece of sample, and placing the small piece of sample on a sample stand of the SEM-EDS for testing; adjusting a position of the small piece of sample during testing, so that the flat edge of the small piece of sample is presented in a field of view; and using a line scanning analysis function of the SEM/EDS to scan a straight line in a direction perpendicular to a plane of the small piece of sample, further analyzing an element composition and a content change case on this line, and finally obtaining the depth of the ion exchange layer.

In some embodiments, the glass 204 has good optical performance, and transmittance of the glass 204 at a wavelength of 550 nm is greater than or equal to 89%. For example, the transmittance of the glass 204 at the wavelength of 550 nm is 89%, 90%, 91%, 92%, or the like. In this way, it can be ensured that the glass 204 and the cover structure 203 have excellent optical performance.

In some embodiments, a pen drop height of the glass 204 is greater than or equal to 20 mm. Further, the pen drop height of the glass 204 is greater than or equal to 25 mm. Furthermore, the pen drop height of the glass 204 is greater than or equal to 30 mm. For example, the pen drop height of the glass 204 is 20 mm, 21 mm, 22 mm, 23 mm, 24 mm, 25 mm, 26 mm, 27 mm, 28 mm, 29 mm, 30 mm, 31 mm, 32 mm, 35 mm, or the like. In this way, mechanical strength of the glass 204 and the cover structure 203 can be increased and impact resistance performance thereof can be improved.

A test method for a pen drop height in this application is as follows: fixing to-be-tested glass to a steel plate in parallel; letting a pen tip of a sign pen (a weight of 12 g, a diameter of the pen tip being φ0.5 mm, and M&G Maker) fall freely toward and perpendicular to the to-be-tested glass; and recording a maximum height of the pen tip from the to-be-tested glass in a case that the to-be-tested glass is not damaged and cracked, where the maximum height is the pen drop height. This height value can reflect mechanical strength and impact resistance performance of the glass.

On a basis of any one of the foregoing embodiments, the glass 204 in this embodiment further has good static bending performance. Specifically, a minimum static bending diameter D of the glass 204 is less than or equal to (0.8Et+t) mm, where E is the Young's modulus of the glass 204, in a unit of GPa, and t is the thickness of the glass 204, in a unit of mm. When the minimum static bending diameter D of the glass 204 is calculated, E and t in the calculation formula are only numeric values, and the units are not taken into account. Further, the minimum static bending diameter D of the glass 204 is less than or equal to (0.5Et+t) mm. Furthermore, the minimum static bending diameter D of the glass 204 is less than or equal to (0.3Et+t) mm. In this way, bending strength of the glass 204 can be ensured, helping reduce creases of the glass 204, the cover structure 203 including the glass 204, and the bendable region of the screen 20.

For example, in some embodiments, the Young's modulus E of the glass 204 is 90 GPa, and the thickness t of the glass 204 is 0.03 mm. In this case, a value of 0.8Et+t is 0.8*90*0.03+0.03=2.19 mm, so that the minimum static bending diameter D of the glass 204 is less than or equal to 2.19 mm.

A static bending performance test method is as follows: performing an inward bending test and an outward bending test on to-be-tested glass by using a bending machine, bending the to-be-tested glass to a fixed position and then letting the to-be-tested glass stand for 24 hours, observing whether a crack and a whitening phenomenon occur on the to-be-tested glass, and recording a maximum bending diameter of the to-be-tested glass on which no crack and no whitening phenomenon occur, where the maximum bending diameter is the minimum static bending diameter.

Refer to FIG. 9. FIG. 9 is a schematic diagram of glass 204 in a bent state according to some embodiments of this application. The glass 204 includes a first portion 2041, a second portion 2042, and a third portion 2043 connected between the first portion 2041 and the second portion 2042. When the glass 204 is in a bent state, the first portion 2041 and the second portion 2042 are disposed parallel and opposite to each other, and the third portion 2043 is bent. The bending diameter of the glass 204 described in this embodiment of this application is a diameter of the third portion 2043 of the glass 204 in a bent state.

In some embodiments, the glass 204 further has good dynamic bending performance. Specifically, the glass 204 may be dynamically bent more than or equal to 200,000 times at a bending diameter D of (Et+t) mm. In other words, when the inward bending test and the outward bending test are performed on the to-be-tested glass by using the bending machine, when the bending radius is (Et+t) mm, after a cumulative bending number of 200,000 times, no crack and no whitening phenomenon occur on the to-be-tested glass, where E is the Young's modulus of the glass 204, in a unit of GPa, and t is the thickness of the glass 204, in a unit of mm. When the bending diameter D of the glass 204 is calculated, E and t in the calculation formula are only numeric values, and the units are not taken into account. Therefore, dynamic bending performance of the glass 204 can be ensured, and life spans of the glass 204, the cover structure 203 including the glass 204, and the screen 20 can be prolonged.

For example, in some embodiments, the Young's modulus E of the glass 204 is 90 GPa, and the thickness t of the glass 204 is 0.03 mm. In this case, a value of Et+t is 90*0.03+0.03=2.73 mm, so that the glass 204 can be dynamically bent more than or equal to 200,000 times at a bending diameter D of 2.73 mm.

Further, the glass 204 may be dynamically bent more than or equal to 300,000 times at the bending diameter D of (Et+t) mm. In other words, when the inward bending test and the outward bending test are performed on the to-be-tested glass 204 by using the bending machine, when the bending radius is (Et+t) mm, after a cumulative bending number of 300,000 times, no crack and no whitening phenomenon occur on the to-be-tested glass. Therefore, dynamic bending performance of the glass 204 can be further ensured, and a life span of the cover structure 203 can be prolonged.

The following describes a preparation method for the glass 204 in an embodiment of this application.

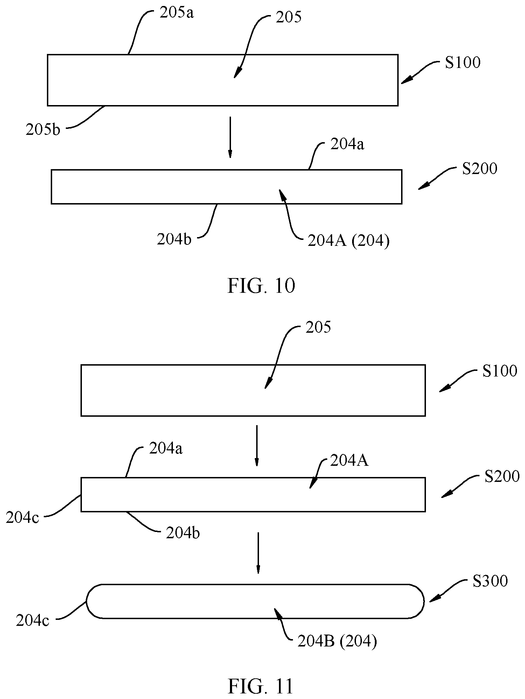

Refer to FIG. 10. FIG. 10 is a flowchart of a preparation method for glass according to some embodiments of this application. The preparation method for glass includes:
Step S100: Provide a glass substrate 205, where a Young's modulus of the glass substrate 205 is greater than or equal to 90 GPa.

Referring to FIG. 10, the glass substrate 205 is in a shape of a flat plate, the glass substrate 205 includes a first face 205a and a second face 205b that are opposite to each other in a thickness direction of the glass substrate 205, and both the first face 205a and the second face 205b may be smooth planes.

In some embodiments, the glass substrate 205 is nanocrystal glass, and the nanocrystal glass may be the nanocrystal glass in any one of the foregoing embodiments. It may be understood that, in another embodiment, the glass substrate 205 may alternatively be base glass, provided that a Young's modulus of the glass substrate 205 is greater than or equal to 90 GPa.

Continue to refer to FIG. 10. The preparation method for glass further includes: Step S200: Perform thinning processing on the glass substrate 205 to thin the glass substrate 205 to a target thickness to obtain first glass 204A, where the first glass 204A includes a first surface 204a and a second surface 204b that are disposed opposite to each other in a thickness direction of the first glass 204A, and surface roughness Ra of the first surface 204a and/or the second surface 204b is greater than or equal to 3 nm and less than or equal to 100 nm. In some embodiments, the target thickness may be 0.02 mm~0.1 mm.

The first glass 204A is the glass 204 prepared by using the preparation method in this embodiment of this application.

In some embodiments, a method for performing thinning processing on the glass substrate 205 includes one or more of chemical thinning, mechanical grinding and polishing, and chemical mechanical polishing.

In some embodiments, thinning processing may be performed on the glass substrate 205 by using one thinning method of chemical thinning. Specifically, the performing thinning processing on the glass substrate 205 includes: performing chemical thinning processing on the glass substrate 205 to thin the glass substrate 205 to the target thickness to obtain the first glass 204A, and making the surface roughness Ra of the first surface 204a and/or the second surface 204b of the first glass 204A be to greater than or equal to 3 nm and less than or equal to 100 nm.

Chemical thinning is a thinning manner in which an etching solution (also referred to as a corrosive solution) is used to corrode a surface of the glass substrate 205 to peel off the surface of the glass substrate 205 to implement a thinning objective. A principle of chemical thinning is as follows: The etching solution reacts with SiO₂ in glass. SiO₂ is a main component for forming a glass frame (also referred to as a glass network structure). After SiO₂ reacts with the etching solution, the glass frame of the glass is damaged, causing the glass frame to break down. After the glass frame breaks down, a part of components (such as Si, Al, alkali metal, alkaline earth metal, and nanocrystalline particles) reacts with the etching solution to form some complexes, which dissolve in the etching solution. Another part of components in the glass (for example, nanocrystalline particles) is directly attached to the surface of the glass in a form of precipitation as the glass frame breaks down. A precipitate attached to the glass surface forms a morphology of a microstructure 204d on the glass surface, which can adjust surface roughness of the glass.

Specifically, a component of the etching solution may be adjusted, to adjust an amount of particles attached to the glass surface, so that surface roughness of the thinned glass substrate 205 can be controlled, to further control surface roughness of the prepared glass 204.

When chemical thinning processing is performed on the glass substrate 205, the glass substrate 205 may be fixed by using a fixture. Then, the etching solution is sprayed on a to-be-thinned surface of the glass substrate 205, or the to-be-thinned surface of the glass substrate 205 is immersed in the etching solution, so that peeling off occurs on the surface of the glass substrate 205, thereby implementing a thinning purpose. The to-be-thinned surface is the first face 205a and/or the second face 205b of the glass substrate 205.

When chemical thinning processing is performed on the glass substrate 205, chemical thinning processing may be performed on two surfaces of the glass substrate 205, so that a thickness of the glass substrate 205 reaches a target thickness, or chemical thinning processing may be performed on a single surface of the glass substrate 205, so that the thickness of the glass substrate 205 reaches the target thickness. Specifically, when chemical thinning processing is performed on the two surfaces of the glass substrate 205, the first face 205a and the second face 205b of the glass substrate 205 may be separately corroded by using the etching solution, so that the thickness of the glass substrate 205 reaches the target thickness. In this case, both the first face 205a and the second face 205b are to-be-thinned surfaces.

When chemical thinning processing is performed on the single surface of the glass substrate 205, only one of the first face 205a and the second face 205b of the glass substrate 205 may be corroded by using the etching solution, so that the thickness of the glass substrate 205 reaches the target thickness. In this case, one of the first face 205a and the second face 205b is a to-be-thinned surface.

In some embodiments, the etching solution is an acid solution that includes at least one of hydrofluoric acid, sulfuric acid, phosphoric acid, nitric acid, hydrochloric acid, perchloric acid, carboxylic acid (R-COOH), sulfonic acid (R-SO3H), sulfinic acid (R-SOOH), and thiocarboxylic acid (R-SH). For example, the etching solution may be a mixed acid solution including hydrofluoric acid, hydrochloric acid, and sulfuric acid. In some other embodiments, the etching solution may alternatively be an alkali solution including NaOH and KOH. For example, the etching solution may be a mixed alkali solution including NaOH and KOH.

In this way, chemical thinning processing is performed on the glass substrate 205. In an aspect, a thinning purpose can be implemented for the glass substrate 205, so that the glass substrate 205 can be thinned to the target thickness. In another aspect, the surface roughness of the thinned glass substrate 205 can be controlled, to further control the surface roughness of the prepared glass 204, so that the surface roughness of at least one of the first surface 204a and the second surface 204b of the prepared glass 204 reaches 3 nm~100 nm. In still another aspect, in a chemical thinning process, peeling off occurs after the to-be-thinned surface of the glass substrate 205 is corroded by the etching solution, which helps repair a surface crack of the glass substrate 205, and further helps increase mechanical strength of the prepared glass 204.

In some other embodiments, thinning processing may alternatively be performed on the glass substrate 205 by using two thinning methods of mechanical grinding and polishing and chemical thinning. Specifically, the performing thinning processing on the glass substrate 205 may include:
Step S201a: Perform mechanical grinding and polishing processing on the glass substrate 205, so that the glass substrate 205 is thinned to a first thickness, where the first thickness is less than the target thickness.
Step S202a: Perform chemical thinning processing on the glass substrate 205 thinned to the first thickness, so that the glass substrate 205 is thinned to the target thickness to obtain the first glass 204A, where the surface roughness Ra of the first surface 204a and/or the second surface 204b of the first glass 204A is greater than or equal to 3 nm and less than or equal to 100 nm.

The mechanical grinding and polishing may use a friction action between the glass substrate 205 and abrasive powder to achieve a purpose of glass thinning. In this way, before chemical thinning is performed on the glass substrate 205, mechanical grinding and polishing processing is first performed on the glass substrate 205, so that the glass substrate 205 is thinned to a specific thickness, and then chemical thinning processing is performed on the glass substrate 205, thereby improving thinning efficiency and reducing a thickness tolerance of the prepared glass 204.

In still some other embodiments, the performing thinning processing on the glass substrate 205 may include:
Step S201b: Perform mechanical grinding and polishing processing on the glass substrate 205, so that the glass substrate 205 is thinned to a first thickness.
Step S202b: Perform chemical mechanical polishing processing on the glass substrate 205 thinned to the first thickness, so that the glass substrate 205 is thinned to the target thickness to obtain the first glass 204A, where the surface roughness Ra of the first surface 204a and/or the second surface 204b of the first glass 204A is greater than or equal to 3 nm and less than or equal to 100 nm.

Chemical mechanical polishing is to rotate to-be-polished glass relative to a polishing pad under a specific downward pressure and in presence of polishing solution (a mixed solution including ultra-fine particles, a chemical oxidant, and a liquid medium), use mechanical grinding of abrasive particles and a corrosive effect of the chemical oxidant to complete material removal on the glass surface, to achieve a purpose of thinning, and adjust surface roughness of the thinned glass substrate by adjusting a chemical polishing pressure and composition of the polishing solution.

It may be understood that in another embodiment, the glass substrate 205 may alternatively be thinned to the target thickness by using only one thinning method of mechanical grinding and polishing processing or chemical mechanical polishing processing. Alternatively, the glass substrate 205 may be thinned to the target thickness by using a combination of three thinning methods of mechanical grinding and polishing, chemical thinning, and chemical mechanical polishing.

According to the preparation method for the glass 204 in this embodiment of this application, the Young's modulus of the glass substrate 205 is set to be greater than or equal to 90 GPa, and the surface roughness Ra of the first surface 204a and/or the second surface 204b of the glass 204 (for example, the first glass 204A) obtained after thinning processing is controlled to be greater than or equal to 3 nm and less than or equal to 100 nm. On the one hand, rigidity and impact resistance performance of the prepared glass 204 can be improved, helping reduce deformation of the glass 204, improve a deformation resistance capability of the cover structure 203 including the glass 204, and improve a capability of the cover structure 203 to recover to an original shape after deformation. Therefore, a crease in a bendable region of the screen 20 can be reduced to better protect the screen 20. On the other hand, while ensuring optical performance of the glass 204, adhesion between the surface of the glass 204 (namely, the first surface 204a and the second surface 204b mentioned above) and an organic material can be increased, and a risk that the organic material attached to the surface of the glass 204 is peeled off from the glass 204 can be reduced or even avoided. Therefore, deformation of the organic material in a folding process can be reduced, to reduce creases of the cover structure 203 and the screen 20. In addition, the preparation method is simple and easy to implement.

In some other embodiments, refer to FIG. 11. FIG. 11 is a flowchart of a preparation method for glass 204 according to some other embodiments of this application. A difference between the preparation method in this embodiment and the preparation method shown in FIG. 10 lies in that, in the preparation method in this embodiment, after the thinning the glass substrate 205 to a target thickness to obtain first glass 204A, the method further includes:
Step S300: Perform edge processing on the first glass 204A, so that a side surface 204c of the first glass 204A is formed into an arc surface.

For example, referring to FIG. 11, the side surface 204c of the first glass 204A is a surface connected between the first surface 204a and the second surface 204b. After edge processing is performed on the first glass 204A, the side surface 204c of the first glass 204A may be formed in a circular arc surface, an elliptical arc surface, or the like, to obtain second glass 204B. The second glass 204B is the glass 204 prepared by using the preparation method in this embodiment.

For example, the circular arc surface is a semi-circular arc surface. It may be understood that in another embodiment, the circular arc surface may alternatively be an inferior arc surface. In this way, the side surface 204c of the glass 204 prepared by using the preparation method can be formed into an arc surface, so that stress at an edge of the glass 204 can be reduced, which helps increase bending strength of the glass 204, thereby helping further reduce a crease in a bendable region of the screen 20.

Specifically, in some embodiments, the performing edge processing on the first glass 204A includes: performing chemical corrosion processing on an edge of the first glass 204A. In some other embodiments, the performing edge processing on the first glass 204A may alternatively include: performing heat treatment on the first glass 204A. In a heat treatment process, the side surface 204c of the first glass 204Amay be formed into an arc surface depending on surface tension of the first glass 204A.

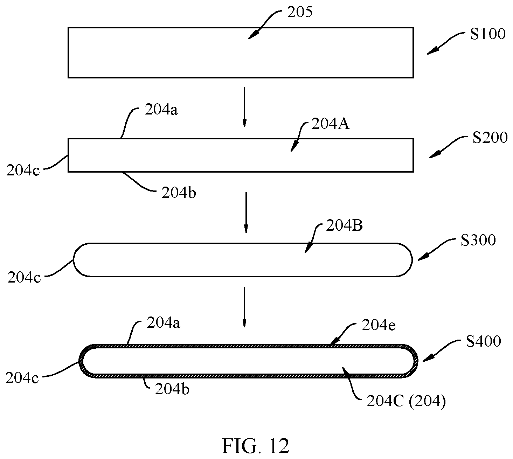

In still some other embodiments, refer to FIG. 12. FIG. 12 is a flowchart of a preparation method for glass 204 according to still some other embodiments of this application. A difference between the preparation method in this embodiment and the preparation method in the embodiment shown in FIG. 11 lies in that, in the preparation method in this embodiment, after the thinning the glass substrate 205 to a target thickness to obtain first glass 204A, the method further includes:
Step S400: Perform chemical strengthening processing on the first glass 204A.

Referring to FIG. 12, in this embodiment, after edge processing is performed on the first glass 204A, chemical strengthening processing may be performed on the first glass 204A. Specifically, after edge processing is performed on the first glass 204A, the second glass 204B is obtained, and then chemical strengthening processing is performed on the obtained second glass 204B to obtain third glass 204C. The third glass 204C is the glass 204 prepared by using the preparation method in this embodiment. Specifically, an ion exchange layer 204e is formed on a surface of the third glass 204C.

The ion exchange layer 204e may include a Na ion exchange layer or a K ion exchange layer, or the ion exchange layer 204e may include the K ion exchange layer and the Na ion exchange layer. In this way, the ion exchange layer 204e on the side surface 204c of the first glass 204A can be prevented from being corroded in an edge processing process, thereby ensuring that the entire surface of the prepared glass 204 can form the ion exchange layer 204e.

When the glass substrate 205 is nanocrystal glass, chemically strengthened nanocrystal glass may be obtained after chemical strengthening processing. When the glass substrate 205 is base glass, chemically strengthened glass may be obtained after chemical strengthening processing.

In some embodiments, when chemical strengthening processing is performed on the second glass 204B, chemical strengthening may be performed once, or chemical strengthening may be performed twice.

According to the preparation method in this embodiment, chemical strengthening processing is performed on the first glass 204A. On the one hand, specific compressive stress can be obtained on the surface of the prepared glass 204. When the glass 204 is subjected to an external force, first, the compressive stress on the surface of the glass 204 needs to be offset, and then the glass 204 is in a tension state. In this way, a capability of the glass 204 to resist an external force is improved, and strength of the glass 204 is significantly increased, so that a deformation resistance capability of the glass 204 and a capability to recover to an original shape after deformation can be significantly improved. Therefore, a crease in a bendable region of the screen 20 can be reduced to better protect the screen 20. On the other hand, after chemical strengthening is performed on the first glass 204A, the ion exchange layer 204e with a specific depth is formed on the surface of the prepared glass 204. In this way, even if a crack is formed on the surface of the glass 204 due to an external force, the formed ion exchange layer 204e can effectively eliminate or suppress further propagation of the crack. Therefore, a capability of the glass to resist an external force is greatly improved, so that strength of the prepared glass 204 is greatly enhanced.

It may be understood that step S400 in this embodiment of this application may be combined with the preparation method in any embodiment of this application. For example, when the preparation method does not include step S300, chemical strengthening processing may be directly performed on the first glass 204A.

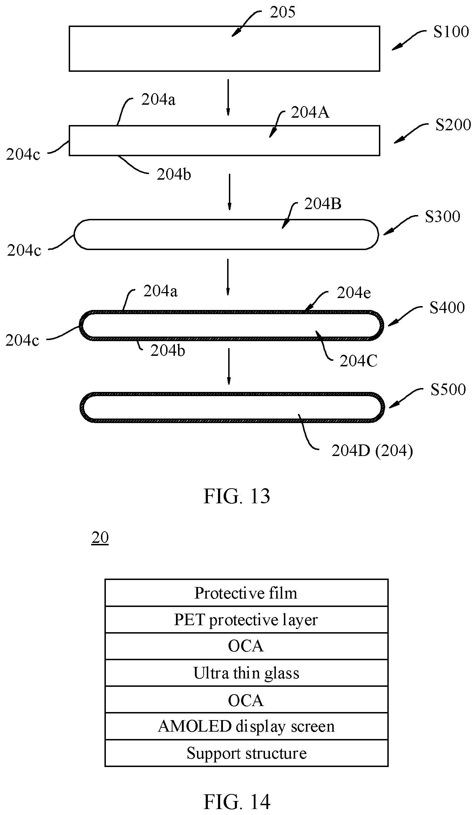

**In** still some other embodiments, refer to FIG. 13. FIG. 13 is a flowchart of a preparation method for glass 204 according to still some other embodiments of this application. A difference between the preparation method in this embodiment and the preparation method in the embodiment shown in FIG. 12 lies in that, in the preparation method in this embodiment, after the thinning the glass substrate 205 to a target thickness to obtain first glass 204A, the method further includes:

Step S500: Perform chemical polishing processing on the first glass 204A. Chemical polishing refers to a method for further dissolving an uneven region on a surface of glass by using a chemical etching action of a chemical reagent to passivate a wear mark for etching and leveling. In this way, surface uniformity of the prepared glass 204 can be increased, helping further increase mechanical strength of the glass 204.

Specifically, in this embodiment, after edge processing is performed on the first glass 204A, the second glass 204B is obtained, and then chemical strengthening processing is performed on the obtained second glass 204B to obtain the third glass 204C. Then, chemical polishing processing may be performed on the third glass 204C to obtain fourth glass 204D. The fourth glass 204D is the glass 204 prepared by using the preparation method in this embodiment. In this way, surface uniformity of the prepared glass 204 can be further ensured.

It may be understood that step S500 in this embodiment of this application may be combined with the preparation method in any embodiment of this application.

The following describes in detail the preparation method for glass 204 in this application with reference to specific embodiments.

### Embodiment 1

In this embodiment of this application, the preparation method for glass 204 includes the following:

The preparation method for glass 204 includes the following:
(1) providing a glass substrate 205, where the glass substrate 205 is nanocrystal glass, a Young's modulus of the glass substrate 205 is 90 GPa, and a thickness thereof is 0.2 mm;
(2) performing thinning processing on the glass substrate 205: performing chemical thinning processing on a first face 205a of the glass substrate 205, and performing chemical thinning processing on a second face 205b of the glass substrate 205, so that the thickness of the glass substrate 205 is thinned to 0.03 mm, where surface roughness Ra of the first face 205a of the thinned glass substrate 205 is 5 nm, and surface roughness Ra of the second face 205b thereof is 5 nm;
(3) performing edge processing on the thinned glass substrate 205: performing chemical corrosion processing on an edge of the glass substrate 205, so that a side surface of the thinned glass substrate 205 is a semi-circular arc surface;
(4) performing chemical strengthening processing on the glass substrate 205 obtained after edge processing: performing chemical strengthening processing on the glass substrate 205 once, to form a K ion exchange layer on a surface of the glass substrate 205, where a depth of the K ion exchange layer 204e is 4 µm; and
(5) performing chemical polishing processing on the glass substrate 205 obtained after chemical strengthening processing to obtain the glass 204.

Performance of the glass 204 is shown in Table 1.

### Embodiment 2

In this embodiment of this application, the preparation method for glass 204 includes the following:
The preparation method for glass 204 includes the following:
(1) providing a glass substrate 205, where the glass substrate 205 is nanocrystal glass, a Young's modulus of the glass substrate 205 is 90 GPa, and a thickness thereof is 0.2 mm;
(2) performing thinning processing on the glass substrate 205: performing chemical thinning processing on a first face 205a of the glass substrate 205, and performing chemical thinning processing on a second face 205b of the glass substrate 205, so that the thickness of the glass substrate 205 is thinned to 0.03 mm, where surface roughness Ra of the first face 205a of the thinned glass substrate 205 is 45 nm, and surface roughness Ra of the second face 205b thereof is 5 nm;
(3) performing edge processing on the thinned glass substrate 205: performing chemical corrosion processing on an edge of the glass substrate 205, so that a side surface of the thinned glass substrate 205 is a semi-circular arc surface;
(4) performing chemical strengthening processing on the glass substrate 205 obtained after edge processing: performing chemical strengthening processing on the glass substrate 205 once, to form a K ion exchange layer on a surface of the glass substrate 205, where a depth of the K ion exchange layer is 4 µm; and
(5) performing chemical polishing processing on the glass substrate 205 obtained after chemical strengthening processing to obtain the glass 204.

Performance of the glass 204 is shown in Table 1.

### Embodiment 3

In this embodiment of this application, the preparation method for glass 204 includes the following:
The preparation method for glass 204 includes the following:
(1) providing a glass substrate 205, where the glass substrate 205 is nanocrystal glass, a Young's modulus of the glass substrate 205 is 90 GPa, and a thickness thereof is 0.2 mm;
(2) performing thinning processing on the glass substrate 205: performing chemical thinning processing on a first face 205a of the glass substrate 205, and performing chemical thinning processing on a second face 205b of the glass substrate 205, so that the thickness of the glass substrate 205 is thinned to 0.03 mm, where surface roughness Ra of the first face 205a of the thinned glass substrate 205 is 45 nm, and surface roughness Ra of the second face 205b thereof is 40 nm;
(3) performing edge processing on the thinned glass substrate 205: performing chemical corrosion processing on an edge of the glass substrate 205, so that a side surface of the thinned glass substrate 205 is a semi-circular arc surface;
(4) performing chemical strengthening processing on the glass substrate 205 obtained after edge processing: performing chemical strengthening processing on the glass substrate 205 once, to form a K ion exchange layer on a surface of the glass substrate 205, where a depth of the K ion exchange layer is 4 µm; and
(5) performing chemical polishing processing on the glass substrate 205 obtained after chemical strengthening processing to obtain the glass 204.

Performance of the glass 204 is shown in Table 1.

### Embodiment 4

In this embodiment of this application, the preparation method for glass 204 includes the following:
The preparation method for glass 204 includes the following:
(1) providing a glass substrate 205, where the glass substrate 205 is nanocrystal glass, a Young's modulus of the glass substrate 205 is 100 GPa, and a thickness thereof is 0.2 mm;
(2) performing thinning processing on the glass substrate 205: after mechanical grinding and polishing processing is separately performed on a first face 205a and a second face 205b of the glass substrate 205, performing chemical thinning processing on the first face 205a of the glass substrate 205, and performing chemical thinning processing on the second face 205b of the glass substrate 205, so that the thickness of the glass substrate 205 is thinned to 0.03 mm, where surface roughness Ra of the first face 205a of the thinned glass substrate 205 is 5 nm, and surface roughness Ra of the second face 205b thereof is 5 nm;
(3) performing edge processing on the thinned glass substrate 205: performing chemical corrosion processing on an edge of the glass substrate 205, so that a side surface of the thinned glass substrate 205 is a semi-circular arc surface;
(4) performing chemical strengthening processing on the glass substrate 205 obtained after edge processing: performing chemical strengthening processing on the glass substrate 205 for a first time, to form a Na ion exchange layer on a surface of the glass substrate 205, where a depth of the Na ion exchange layer is 7 µm; and performing chemical strengthening processing, for a second time, on the glass substrate 205 obtained after chemical strengthening processing for the first time, to form a K ion exchange layer on the surface of the glass substrate 205, where a depth of the K ion exchange layer is 3 µm; and
(5) performing chemical polishing processing on the glass substrate 205 obtained after chemical strengthening processing to obtain the glass 204.

Performance of the glass 204 is shown in Table 1.

### Embodiment 5

In this embodiment of this application, the preparation method for glass 204 includes the following:
The preparation method for glass 204 includes the following:
(1) providing a glass substrate 205, where the glass substrate 205 is nanocrystal glass, a Young's modulus of the glass substrate 205 is 100 GPa, and a thickness thereof is 0.2 mm;
(2) performing thinning processing on the glass substrate 205: after mechanical grinding and polishing processing is separately performed on a first face 205a and a second face 205b of the glass substrate 205, performing chemical thinning processing on the first face 205a of the glass substrate 205, so that the thickness of the glass substrate 205 is thinned to 0.03 mm, where surface roughness Ra of the first face 205a of the thinned glass substrate 205 is 50 nm, and surface roughness Ra of the second face 205b thereof is 5 nm;
(3) performing edge processing on the thinned glass substrate 205: performing chemical corrosion processing on an edge of the glass substrate 205, so that a side surface of the thinned glass substrate 205 is a semi-circular arc surface;
(4) performing chemical strengthening processing on the glass substrate 205 obtained after edge processing: performing chemical strengthening processing on the glass substrate 205 for a first time, to form a Na ion exchange layer on the glass substrate 205, where a depth of the Na ion exchange layer is 7 µm; and performing chemical strengthening processing, for a second time, on the glass substrate 205 obtained after chemical strengthening processing for the first time, to form a K ion exchange layer on the glass substrate 205, where a depth of the K ion exchange layer is 3 µm; and
(5) performing chemical polishing processing on the glass substrate 205 obtained after chemical strengthening processing to obtain the glass 204.

Performance of the glass 204 is shown in Table 1.

### Embodiment 6

In this embodiment of this application, the preparation method for glass 204 includes the following:
The preparation method for glass 204 includes the following:
(1) providing a glass substrate 205, where the glass substrate 205 is nanocrystal glass, a Young's modulus of the glass substrate 205 is 100 GPa, and a thickness thereof is 0.2 mm;
(2) performing thinning processing on the glass substrate 205: after mechanical grinding and polishing processing is separately performed on a first face 205a and a second face 205b of the glass substrate 205, performing chemical thinning processing on the first face 205a of the glass substrate 205, and performing chemical thinning processing on the second face 205b of the glass substrate 205, so that the thickness of the glass substrate 205 is thinned to 0.03 mm, where surface roughness Ra of the first face 205a of the thinned glass substrate 205 is 35 nm, and surface roughness Ra of the second face 205b thereof is 35 nm;
(3) performing edge processing on the thinned glass substrate 205: performing chemical corrosion processing on an edge of the glass substrate 205, so that a side surface of the thinned glass substrate 205 is a semi-circular arc surface;
(4) performing chemical strengthening processing on the glass substrate 205 obtained after edge processing: performing chemical strengthening processing on the glass substrate 205 for a first time, to form a Na ion exchange layer on the glass substrate 205, where a depth of the Na ion exchange layer is 7 µm; and performing chemical strengthening processing, for a second time, on the glass substrate 205 obtained after chemical strengthening processing for the first time, to form a K ion exchange layer on the glass substrate 205, where a depth of the K ion exchange layer is 3 µm; and
(5) performing chemical polishing processing on the glass substrate 205 obtained after chemical strengthening processing to obtain the glass 204.

Performance of the glass 204 is shown in Table 1.

### Embodiment 7

In this embodiment of this application, the preparation method for glass 204 includes the following:
The preparation method for glass 204 includes the following:
(1) providing a glass substrate 205, where the glass substrate 205 is nanocrystal glass, a Young's modulus of the glass substrate 205 is 110 GPa, and a thickness thereof is 0.2 mm;
(2) performing thinning processing on the glass substrate 205: after mechanical grinding and polishing processing is separately performed on a first face 205a and a second face 205b of the glass substrate 205, performing chemical thinning processing on the first face 205a of the glass substrate 205, and performing chemical thinning processing on the second face 205b of the glass substrate 205, so that the thickness of the glass substrate 205 is thinned to 0.03 mm, where surface roughness Ra of the first face 205a of the thinned glass substrate 205 is 5 nm, and surface roughness Ra of the second face 205b thereof is 5 nm;
(3) performing edge processing on the thinned glass substrate 205: performing chemical corrosion processing on an edge of the glass substrate 205, so that a side surface of the thinned glass substrate 205 is a semi-circular arc surface;
(4) performing chemical strengthening processing on the glass substrate 205 obtained after edge processing: performing chemical strengthening processing on the glass substrate 205 for a first time, to form a Na ion exchange layer on the glass substrate 205, where a depth of the Na ion exchange layer is 8 µm; and performing chemical strengthening processing, for a second time, on the glass substrate 205 obtained after chemical strengthening processing for the first time, to form a K ion exchange layer on the glass substrate 205, where a depth of the K ion exchange layer is 2 µm; and
(5) performing chemical polishing processing on the glass substrate 205 obtained after chemical strengthening processing to obtain the glass 204.

Performance of the glass 204 is shown in Table 1.

### Embodiment 8

In this embodiment of this application, the preparation method for glass 204 includes the following:
The preparation method for glass 204 includes the following:
(1) providing a glass substrate 205, where the glass substrate 205 is nanocrystal glass, a Young's modulus of the glass substrate 205 is 110 GPa, and a thickness thereof is 0.2 mm;
(2) performing thinning processing on the glass substrate 205: after mechanical grinding and polishing processing is separately performed on a first face 205a and a second face 205b of the glass substrate 205, performing chemical thinning processing on the first face 205a of the glass substrate 205, and performing chemical thinning processing on the second face 205b of the glass substrate 205, so that the thickness of the glass substrate 205 is thinned to 0.03 mm, where surface roughness Ra of the first face 205a of the thinned glass substrate 205 is 50 nm, and surface roughness Ra of the second face 205b thereof is 5 nm;
(3) performing edge processing on the thinned glass substrate 205: performing chemical corrosion processing on an edge of the glass substrate 205, so that a side surface of the thinned glass substrate 205 is a semi-circular arc surface;
(4) performing chemical strengthening processing on the glass substrate 205 obtained after edge processing: performing chemical strengthening processing on the glass substrate 205 for a first time, to form a Na ion exchange layer on the glass substrate 205, where a depth of the Na ion exchange layer is 8 µm; and performing chemical strengthening processing, for a second time, on the glass substrate 205 obtained after chemical strengthening processing for the first time, to form a K ion exchange layer on the glass substrate 205, where a depth of the K ion exchange layer is 2 µm; and
(5) performing chemical polishing processing on the glass substrate 205 obtained after chemical strengthening processing to obtain the glass 204.

Performance of the glass 204 is shown in Table 1.

### Embodiment 9

In this embodiment of this application, the preparation method for glass 204 includes the following:
The preparation method for glass 204 includes the following:
(1) providing a glass substrate 205, where the glass substrate 205 is nanocrystal glass, a Young's modulus of the nanocrystal glass is 110 GPa, and a thickness thereof is 0.2 mm;
(2) performing thinning processing on the glass substrate 205: after mechanical grinding and polishing processing is performed on a first face 205a and a second face 205b of the glass substrate 205, performing chemical mechanical polishing thinning processing on the first face 205a of the glass substrate 205, and performing chemical mechanical polishing thinning processing on the second face 205b of the glass substrate 205, so that the thickness of the glass substrate 205 is thinned to 0.03 mm, where surface roughness Ra of the first face 205a of the thinned glass substrate 205 is 3 nm, and surface roughness Ra of the second face 205b thereof is 3 nm;
(3) performing edge processing on the thinned glass substrate 205: performing chemical corrosion processing on an edge of the glass substrate 205, so that a side surface of the thinned glass substrate 205 is a semi-circular arc surface;
(4) performing chemical strengthening processing on the glass substrate 205 obtained after edge processing: performing chemical strengthening processing on the glass substrate 205 for a first time, to form a Na ion exchange layer on the glass substrate 205, where a depth of the Na ion exchange layer is 8 µm; and performing chemical strengthening processing, for a second time, on the glass substrate 205 obtained after chemical strengthening processing for the first time, to form a K ion exchange layer on the glass substrate 205, where a depth of the K ion exchange layer is 2 µm; and
(5) performing chemical polishing processing on the glass substrate 205 obtained after chemical strengthening processing to obtain the glass 204.

Performance of the glass 204 is shown in Table 1.

### Comparative Example 1

In this embodiment of this application, the preparation method for glass 204 includes the following:
The preparation method for glass 204 includes the following:
(1) providing a glass substrate 205, where the glass substrate 205 is base glass, a Young's modulus of the base glass is 73 GPa, and a thickness thereof is 0.2 mm;
(2) performing thinning processing on the glass substrate 205: performing chemical thinning processing on a first face 205a of the glass substrate 205, and performing chemical thinning processing on a second face 205b of the glass substrate 205, so that the thickness of the glass substrate 205 is thinned to 0.03 mm, where surface roughness Ra of the first face 205a of the thinned glass substrate 205 is 5 nm, and surface roughness Ra of the second face 205b thereof is 5 nm;
(3) performing edge processing on the thinned glass substrate 205: performing chemical corrosion processing on an edge of the glass substrate 205, so that a side surface of the thinned glass substrate 205 is a semi-circular arc surface;
(4) performing chemical strengthening processing on the glass substrate 205 obtained after edge processing: performing chemical strengthening processing on the glass substrate 205 once, to form a K ion exchange layer on the glass substrate 205, where a depth of the K ion exchange layer is 4 µm; and
(5) performing chemical polishing processing on the glass substrate 205 obtained after chemical strengthening processing to obtain the glass 204.

Performance of the glass 204 is shown in Table 1.

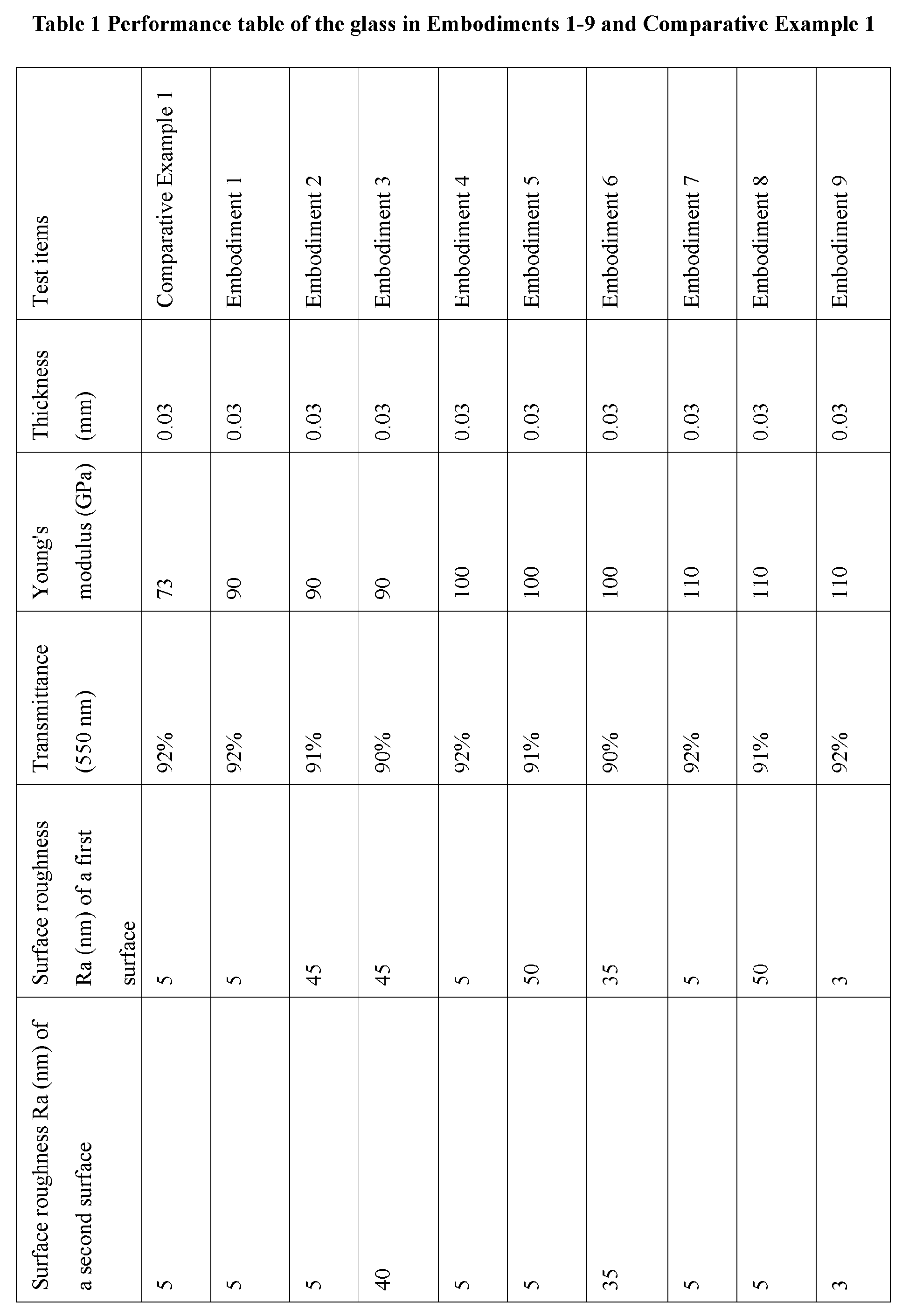

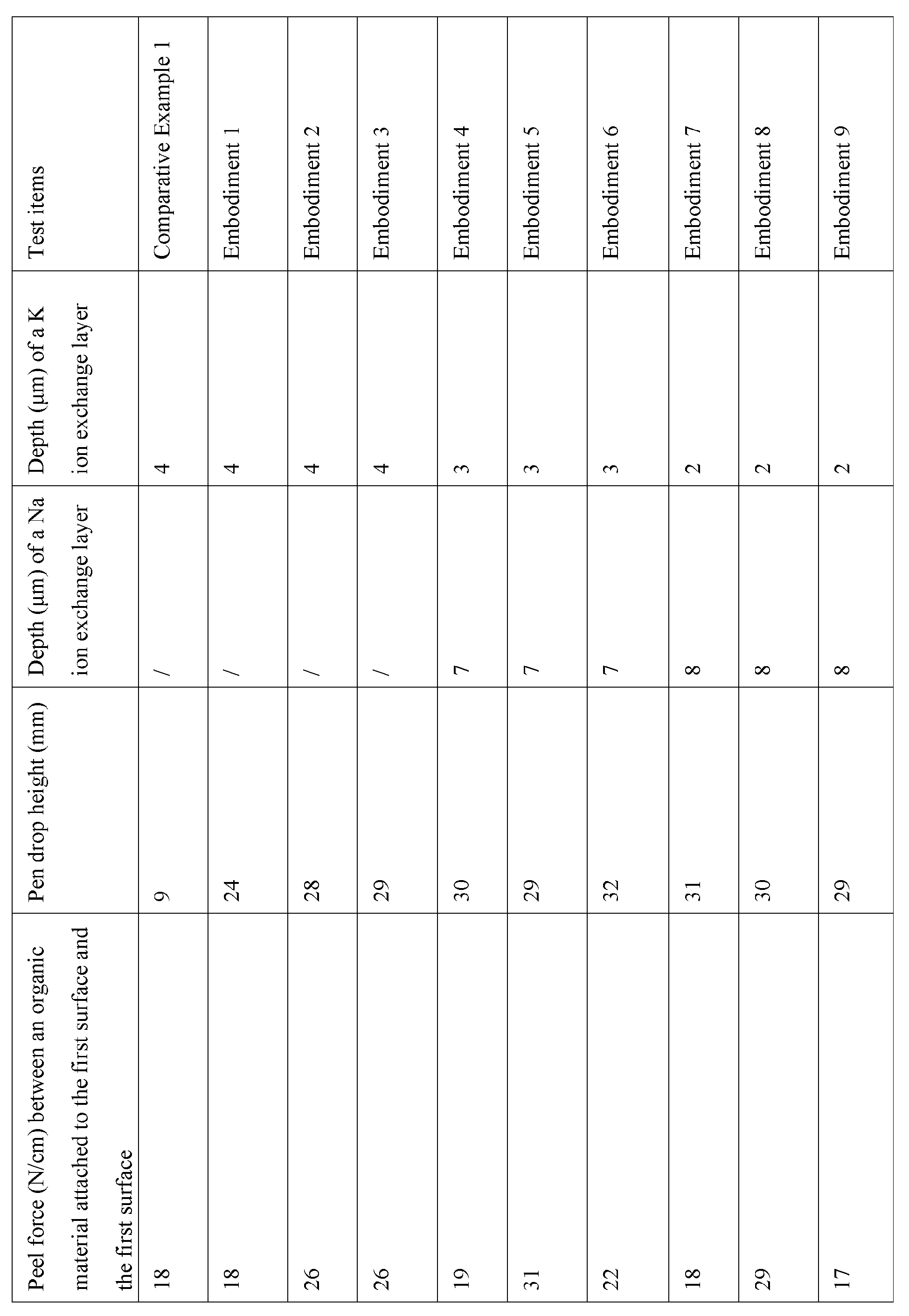

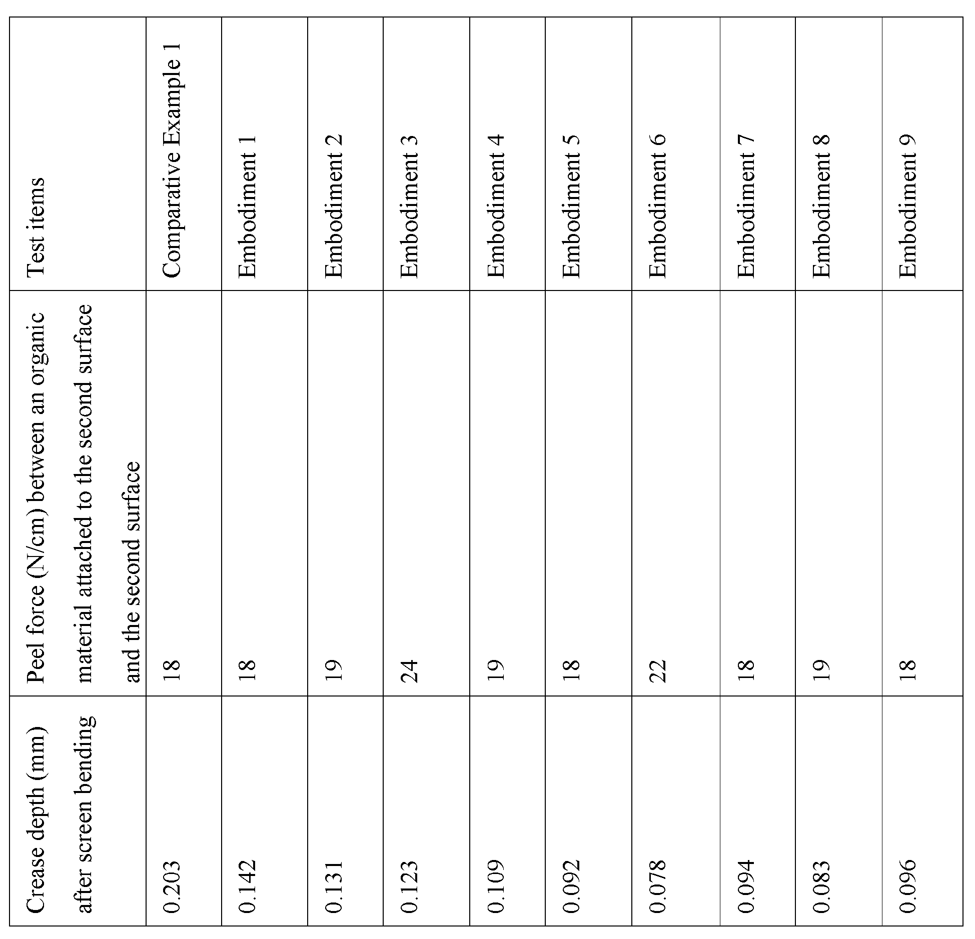

It may be learned from Table 1 that, the Young's modulus of the glass 204 in Comparative Example 1 is 73 GPa, the surface roughness Ra of the first surface 204a thereof is 5 nm, and the surface roughness Ra of the second surface 204b thereof is 5 nm, which does not meet that a Young's modulus is greater than or equal to 90 GPa, and surface roughness Ra of at least one of the first surface 204a and the second surface 204b is 3 nm~100 nm.

The glass 204 in this embodiment has excellent optical performance. Specifically, transmittance of light at 550 nm is 92%. In addition, there is a relatively large peel force between an organic material and each of the first surface 204a and the second surface 204a and the first surface 204a is 18 N/cm, and the peel force between the organic material attached to the second surface 204b and the first surface 204 is 18 N/cm. However, results of the glass 204 in impact resistance performance in a pen drop test and a crease depth test performed after the screen 20 is bent are not ideal. Specifically, the pen drop height is 9 mm, and the crease depth of the screen 20 after being bent is 0.203 mm.

For the peel force in this embodiment of this application, reference may be made to GB/T 2792-2014 "measurement of peel adhesion properties for adhesive tapes". A peel force (namely, peel strength) test process is as follows: attaching a transparent adhesive layer to a target surface of glass, lifting the transparent adhesive layer and reversely folding the transparent adhesive layer by 180 degrees, then, pulling the transparent adhesive layer at a speed of 300 mm/min to peel off the transparent adhesive layer from the target surface, and measuring a tensile force of pulling the transparent adhesive layer in this process. When a peel distance reaches 70 mm, a measured average tensile force is a peel force between the transparent adhesive layer and the target surface. A greater peel force indicates a greater binding force between the transparent adhesive layer and the target surface.

In this embodiment of this application, a method for testing a crease depth of the screen 20 after being bent is as follows: stacking glass samples on the screen 20 shown in FIG. 14 by using a same stacked layer structure (a total thickness of the glass samples is about 650 µm), then, separately fixing the stacked screen samples on a dynamic bending fixture, and measuring crease depths in bendable regions of the screen samples after being bent for 30,000 times with a bending radius of 1.5 mm.

The Young's modulus of the glass 204 in Embodiment 1~Embodiment 9 is 90 GPa~110 GPa, the surface roughness Ra of the first surface 204a thereof is 3 nm~50 nm, and the surface roughness Ra of the first surface 204a thereof is 3 nm~40 nm, which meets that a Young's modulus is greater than or equal to 90 GPa, and surface roughness Ra of at least one of the first surface 204a and the second surface 204b is 3 nm~100 nm.

The glass 204 in Embodiment 1~Embodiment 9 has excellent optical performance, which is specifically shown as follows: transmittance of light at 550 nm is 90%~92%. In addition, there is a relatively large peel force between an organic material and each of the first surface 204a and the second surface 204b of the glass 204. The peel force between the organic material attached to the first surface 204a and the first surface 204a is greater than or equal to 18 N/cm, and the peel force between the organic material attached to the second surface 204b and the first surface 204a is also greater than or equal to 18 N/cm. Specifically, the peel force between the organic material attached to the first surface 204a and the first surface 204a is 18 N/cm~31 N/cm, and the peel force between the organic material attached to the second surface 204b and the second surface 204b is 18 N/cm~24 N/cm.

The glass 204 in Embodiment 1~Embodiment 9 shows excellent impact resistance performance in a pen drop height test. Specifically, the pen drop height is 24 mm~32 mm. In addition, the screen 20 having the glass 204 in Embodiment 1~Embodiment 9 also performs well in the crease depth test. Specifically, the crease depth of the screen 20 after being bent is 0.078 mm~0.142 mm.

In addition, by comparing performance of the glass 204 in Embodiment 1~Embodiment 9 in Table 1, it may be learned that when the glass 204 has a same Young's modulus, the crease depth in the bendable region of the screen 20 decreases as the surface roughness of the glass 204 increases. When the glass 204 has same surface roughness, the crease depth in the bendable region of the screen 20 decreases as the Young's modulus of the glass 204 increases.

In conclusion, in the embodiments of this application, the Young's modulus of the glass 204 is set to be greater than or equal to 90 GPa, and the surface roughness Ra of the at least one of the first surface 204a and the second surface 204b is set to 3 nm~100 nm, so that impact resistance performance of the glass 204 can be improved, mechanical strength of the glass 204 is ensured, and a binding force between the glass 204 and an organic material is increased. Therefore, creases of the screen 20 including the glass 204 and the electronic device 100 can be reduced.

Specifically, the impact resistance performance of the glass 204 provided in the embodiments of this application can be improved by 1.67 times~2.55 times compared with that in Comparative Example 1, and the crease depth of the screen 20 including the glass 204 provided in the embodiments of this application after being bent can be reduced by 30%~61.6% compared with that in Comparative Example 1.

In the embodiments of this application, the glass 204 is applied to the cover structure 203 of the electronic device 100. Because the glass 204 has a relatively high Young's modulus, rigidity and impact resistance performance of the cover structure 203 can be improved. This helps reduce deformation of the cover structure 203, improve a deformation resistance capability of the cover structure 203 and a capability of the cover structure 203 to recover to an original shape after deformation. Therefore, the crease in the bendable region of the screen 20 can be reduced to better protect the screen 20.

In addition, because the surface roughness Ra of the first surface 204a and/or the second surface 204b of the glass 204 is 3 nm~100 nm, a contact area between the organic material and each of the first surface 204a and/or the second surface 204b can be increased, thereby enhancing adhesion between the two. Therefore, an effect of reducing deformation of the organic material and a crease is achieved, and display aesthetics of the electronic device 100 can be effectively improved.

Specifically, when the glass 204 is applied to the cover structure 203 shown in FIG. 5, a peel force between the cover structure 203 and the display screen 202 and a peel force between the protective layer 203b in the cover structure 203 and the glass 204 can be increased. The peel force between the cover structure 203 and the display screen 202 may be greater than or equal to 18 N/cm, and the peel force between the protective layer 203b and the glass 204 is greater than or equal to 18 N/cm. In this way, a binding force between the cover structure 203 and the display screen 202 and a binding force between the protective layer 203b in the cover structure 203 and the glass 204 can be ensured. Therefore, an effect of reducing the crease of the screen 20 is achieved, and display aesthetics of the electronic device 100 can be further effectively improved.

It should be noted that when the protective layer 203b is fixedly connected to the glass 204 by using the optically clear adhesive 206, the peel force between the protective layer 203b and the glass 204 is a peel force between the optically clear adhesive 206 and the glass 204. When the protective layer 203b is directly coated on the glass 204, the peel force between the protective layer 203b and the glass 204 is a peel force between the protective layer 203b itself and the glass 204.

In the descriptions of this specification, specific features, structures, materials, or characteristics may be properly combined in any one or more embodiments or examples.

Finally, it should be noted that the foregoing embodiments are only used to describe the technical solutions in this application, but are not used to limit this application. Although this application has been described in detail with reference to the foregoing embodiments, it should be understood by a person of ordinary skill in the art that the technical solutions described in the foregoing embodiments may still be modified, or some technical features thereof may be equivalently replaced. These modifications or replacements do not make the essence of the corresponding technical solutions depart from the spirit and scope of the technical solutions in the embodiments of this application.

## Claims

1. Glass, comprising a first surface and a second surface disposed opposite to each other in a thickness direction of the glass, wherein surface roughness of at least one of the first surface and the second surface is greater than or equal to 3 nm and less than or equal to 100 nm, and a Young's modulus of the glass is greater than or equal to 90 GPa.

2. The glass according to claim 1, wherein the surface roughness of the at least one of the first surface and the second surface is greater than or equal to 15 nm and less than or equal to 80 nm.

3. The glass according to claim 1 or 2, wherein the glass is nanocrystal glass.

4. The glass according to claim 3, wherein the nanocrystal glass comprises a primary crystalline phase, and the primary crystalline phase is one or more of spodumene, petalite, lithium silicate, lithium disilicate, β-quartz, zirconium oxide, spinel, and zinc spinel.

5. The glass according to claim 3 or 4, wherein the nanocrystal glass comprises the primary crystalline phase, and a mass fraction of the primary crystalline phase is greater than or equal to 50%.

6. The glass according to any one of claims 3-5, wherein an average crystalline phase particle size of the nanocrystal glass is greater than or equal to 5 nm and less than or equal to 80 nm.

7. The glass according to any one of claims 1-6, wherein a thickness of the glass is greater than or equal to 0.02 mm and less than or equal to 0.1 mm.

8. The glass according to any one of claims 1-7, wherein transmittance of the glass at a wavelength of 550 nm is greater than or equal to 89%.

9. The glass according to any one of claims 1-8, wherein a pen drop height of the glass is greater than or equal to 20 mm.

10. The glass according to any one of claims 1-9, wherein a minimum static bending diameter of the glass is less than or equal to (0.8Et+t) mm; and E is the Young's modulus of the glass, in a unit of GPa, and t is the thickness of the glass, in a unit of mm.

11. The glass according to any one of claims 1-10, wherein a quantity of times that the glass is dynamically bent at a bending diameter of (Et+t) mm is greater than or equal to 200,000 times.

12. The glass according to any one of claims 1-11, wherein an ion exchange layer is formed on a surface of the glass.

13. The glass according to claim 12, wherein the ion exchange layer comprises a K ion exchange layer, and a depth of the K ion exchange layer is greater than or equal to 0.06 t and less than or equal to 0.2 t, wherein t is the thickness of the glass, in a unit of mm.

14. The glass according to claim 12 or 13, wherein the ion exchange layer comprises a Na ion exchange layer, and a depth of the Na ion exchange layer is greater than or equal to 0.15 t and less than or equal to 0.25 t, wherein t is the thickness of the glass, in a unit of mm.

15. The glass according to any one of claims 1-14, wherein the glass comprises a side surface, the side surface is connected between the first surface and the second surface, and the side surface is an arc surface.

16. A preparation method for glass, comprising:
providing a glass substrate, wherein a Young's modulus of the glass substrate is greater than or equal to 90 GPa; and
performing thinning processing on the glass substrate to thin the glass substrate to a target thickness to obtain first glass, wherein the first glass comprises a first surface and a second surface that are opposite to each other in a thickness direction of the first glass, and surface roughness of the first surface and/or the second surface is greater than or equal to 3 nm and less than or equal to 100 nm.

17. The preparation method according to claim 16, wherein a method for performing thinning processing on the glass substrate comprises one or more of chemical thinning, mechanical grinding and polishing, and chemical mechanical polishing.

18. The preparation method according to claim 16 or 17, wherein after the first glass is obtained, the preparation method further comprises: performing edge processing on the first glass, so that a side surface of the first glass is formed into an arc surface.

19. The preparation method according to any one of claims 16-18, wherein after the first glass is obtained, the preparation method further comprises: performing chemical strengthening processing on the first glass to form an ion exchange layer on a surface of the first glass.

20. The preparation method according to any one of claims 16-19, wherein after the first glass is obtained, the preparation method further comprises: performing chemical polishing processing on the first glass.

21. A cover structure, comprising the glass according to any one of claims 1-15 or the glass prepared by using the preparation method according to any one of claims 16-20.

22. The cover structure according to claim 21, further comprising a protective layer, wherein the protective layer is fixedly connected to a first surface or a second surface of the glass.

23. The cover structure according to claim 22, wherein a peel force between the protective layer and the glass is greater than or equal to 18 N/cm.

24. An electronic device, comprising a screen, wherein the screen comprises a display screen and a cover structure that are stacked, the cover structure is located on a side toward which a display surface of the display screen faces, and the cover structure is the cover structure according to any one of claims 21-23.

25. The electronic device according to claim 24, wherein a peel force between the display screen and the cover structure is greater than or equal to 18 N/cm.

26. The electronic device according to claim 24 or 25, further comprising a housing assembly, wherein the housing assembly comprises a first housing, a second housing, and a rotating shaft mechanism, the first housing is rotatably connected to one side of the rotating shaft mechanism, and the second housing is rotatably connected to the other side of the rotating shaft mechanism; and
the screen comprises a first display region, a second display region, and a third display region, the third display region is connected between the first display region and the second display region, the first display region is provided on the first housing, the second display region is provided on the second housing, and the third display region is provided on the rotating shaft mechanism.

27. An application of the glass according to any one of claims 1-15 or the glass prepared by using the preparation method according to any one of claims 16-20 on a cover structure, a screen, and an electronic device.
